# FASCICULE DE BREVET EUROPEEN

(11) **EP 0 556 131 B1**
(45) Date de publication et mention de la délivrance du brevet: **28.08.1996**
(21) Numéro de dépôt: 93420011.4
(22) Date de dépôt: 11.01.1993
(51) Int. Cl.: H01M 4/12, H01M 4/04

(54) **Procédé de fabrication de motifs de lithium mince par adhésion différentielle**
Verfahren zur Herstellung von Lithiummotivs durch Differentialadhäsion
Process of making lithium motifs by differential adhesion

(30) Priorité: 13.01.1992 CA 2059228
(43) Date de publication de la demande: 18.08.1993
(73) Titulaire: HYDRO-QUEBEC, Montréal Québec H2Z 1A4 (CA)
(72) Inventeur: St. Amant, Guy, Trois-Rivières, P.Q. G8Y 6N7 (CA); Ricard, Serge, Shawinigan, P.Q. G9N 5Z8 (CA); Carignan, Claude, Shawinigan, P.Q. G9P 4K7 (CA); Laroche, Guy, Deauville, P.Q. J1N 3N4 (CA); Bouchard, Patrick, Fleurimont, Québec J1E 3L2 (CA)
(74) Mandataire: Guerre, Dominique

(56) Documents cités:
- EP-A- 0 147 929
- WO-A-88/10517
- US-A- 4 502 903

## Description

L'invention a trait à un procédé de fabrication de motifs de lithium mince ou d'un de ses alliages pouvant servir à l'assemblage d'un générateur électrochimique au lithium.

Les générateurs électrochimiques au lithium concernés par l'invention sont des générateurs réalisés sous forme de films minces et comprenant une électrode au lithium ou un de ses alliages, un électrolyte liquide ou solide, et une électrode positive. La capacité surfacique de ces générateurs est comprise entre 1 et 20 Coulombs par cm².

Pour réaliser de tels générateurs, il peut être nécessaire, et ce afin de satisfaire aux exigences de minceur des différentes couches, de pouvoir disposer de films minces de lithium; c'est-à-dire des films ayant une épaisseur inférieure à 50 µm (microns) mais toutefois supérieure à 1 ou 2 µm (microns). En effet, dans les technologies où les capacités surfaciques des électrodes positives varient de 1 Coulomb à 20 Coulombs par cm², les besoins en lithium se traduisent par une épaisseur de l'ordre de 1 à 40 µm (microns), suivant l'excès de lithium que l'on désire conserver par rapport à la capacité de l'électrode positive. La présence d'un excès plus significatif de lithium correspondant à des épaisseurs de lithium plus élevées, par exemple une épaisseur supérieure à 50 µm (microns), est définitivement pénalisante en terme de densité d'énergie stockée par unité de volume compte tenu des grandes surfaces de piles nécessaires à une technologie basée sur des films minces. En plus, on a intérêt à limiter l'excès de lithium en raison de son prix, lequel peut représenter une fraction importante du coût global des accumulateurs au lithium. Finalement, le lithium étant un métal très réactif, toute surépaisseur représente un facteur de risque potentiel lors d'incidents. On a donc intérêt à en limiter l'utilisation, ce qui implique d'utiliser l'épaisseur minimum de lithium qui est nécessaire au bon fonctionnement de la pile. Pour certaines applications, comme en électronique, les formes des piles peuvent être complexes, ce qui nécessite une méthode de mise en 5 oeuvre du lithium très polyvalente. Le lithium doit donc pouvoir être découpé et mis en place facilement. Finalement, la précision de découpe est nécessairement requise puisque des tolérances dimensionnelles très strictes sont fixées par les paramètres mécaniques et électrochimiques.

La technologie utilisée pour la réalisation de ces générateurs repose sur la production, la manipulation et l'assemblage en continu des éléments de la pile. Le lithium métallique mince est difficile à manipuler. Son bobinage dans des épaisseurs voisines de 30 µm (microns) est cependant relativement aisé à condition de ne pas induire de trop fortes contraintes, par exemple par des accélérations rapides. Par contre, la coupe du lithium mince est extrêmement difficile. En effet, le lithium a tendance à coller sur les surfaces et à encrasser les couteaux. Parce que le lithium servant à la fabrication de pile doit rester très propre, on doit exclure toute utilisation d'huiles pour favoriser le découpage avec des couteaux. Pour les épaisseurs de lithium supérieures à 200 µm (microns), il devient facile de couper le lithium à l'aide de couteaux ou poinçons en plastique dur. Pour les épaisseurs de l'ordre de 100 µm (microns), il est aussi possible d'affaiblir localement le lithium entre des couteaux de 30 plastique et de déchirer ensuite le lithium. Cette dernière technique s'en trouve cependant très limitée, si on considère que cette façon de faire implique une déformation du lithium. Le lithium, en plus de sa tendance à coller sur presque toutes les surfaces, est 35 difficilement entraînable sur une machine car sa résistance mécanique est très faible (limite élastique de 84 lb/po2). Une méthode de manipuler le lithium a été décrite dans le brevet français 944-FR où un film support servait à transporter le lithium ou un de ses alliages vers l'électrolyte.

Suivant l'invention, on propose un procédé perfectionné permettant de produire de façon rapide et précise des électrodes négatives de piles au lithium sans restriction quant à la géométrie en utilisant un lithium ultra mince soit de 1 à 50 microns, et ainsi remédier aux inconvénients précités.

L'invention concerne un procédé d'assemblage d'électrodes minces de lithium métallique ou d'un de ses alliages, selon lequel on prépare lesdites électrodes à partir de motifs obtenus d'un film mince de lithium ou d'un de ses alliages préalablement découpés selon des formes géométriques et des dimensions prédéterminées, lesdits motifs étant ensuite transférés sur un film récepteur, caractérisé en ce que l'on déroule simultanément ledit film mince et ledit film récepteur jusqu'à ce qu'ils puissent venir en contact l'un avec l'autre, et que l'on découpe alors lesdits motifs en exerçant une pression sur les deux films aux endroits où le transfert doit s'effectuer, laquelle pression étant suffisante pour faire adhérer lesdits motifs dudit film mince audit récepteur, cette opération s'effectuant pendant un déroulement continu des deux dits films alors qu'ils sont placés pour venir en contact l'un avec l'autre, et étant suivie d'une séparation des deux dits films, les motifs formés adhérant au récepteur et ce qui reste dudit film mince s'en détachant. L'élément en contact avec le film mince est normalement constitué par un film support, un rouleau, un poinçon ou un organe capable de produire un ensemble de zones poinçonnées adjacentes les unes aux autres, non adhérent par rapport au film mince.

De préférence, ledit film mince est en contact avec un élément dont l'adhésion avec ledit film mince est moindre que celle existant entre ledit film mince et ledit récepteur.

Selon une réalisation préférée de l'invention, on découpe les motifs en bloquant localement l'adhésion entre le film mince et le film récepteur.

Selon une autre réalisation préférée de l'invention, le film récepteur comporte des promoteurs d'adhésion découpés selon la géométrie des motifs et destinés à recevoir par transfert, du film mince découpé selon les motifs. C'est ainsi qu'on peut appliquer une pression suffisante sur le film support et le film mince pour les juxtaposer avec adhésion contrôlée, ou augmenter la force d'adhésion entre les deux films en utilisant un promoteur d'adhésion. On peut aussi, si on le désire, amoindrir la force d'adhésion entre les deux films en utilisant un inhibiteur d'adhésion.

Le film support est normalement constitué d'une résine synthétique inerte vis-à-vis le lithium et ses alliages, notamment il peut se présenter sous forme de film à base de polypropylène, de polyéthylène ou d'un mélange de ces résines.

L'on peut ainsi générer la pression en appliquant un rouleau ayant en relief le modèle du motif à produire contre la surface du film libre de lithium ou de ses alliages, ou en appliquant un poinçon dont la dimension correspond à celle des motifs à produire contre la surface du film support libre de lithium ou de ses alliages; ou encore en appliquant un organe capable de produire un ensemble de zones poinçonnées adjacentes les unes aux autres, la dimension de l'ensemble des zones correspondant à celle du motif à produire contre la surface du film support libre de lithium ou de ses alliages; ou encore en faisant déplacer un rouleau sur une plaque comportant en relief au moins un motif à produire et sur laquelle repose le film récepteur, qu'on fait avancer pour un nouveau découpage après l'obtention dudit motif.

Selon une autre réalisation préférée de l'invention, l'on dispose un' film de blocage entre l'ensemble film support film mince et le film récepteur de façon à prévenir tout contact entre le lithium ou ses alliages et le film récepteur aux zones du film récepteur situées hors de la zone où le motif doit être transféré. Par exemple, le film de blocage étant plus adhérent vis-à-vis le film mince que le film support, l'on fixe le film de blocage au film récepteur avant le dépôt du motif de lithium ou de ses alliages sur le film récepteur. Lorsque le motif a été déposé sur le film récepteur, on enlève le film de blocage, ce dernier entraînant les découpes de film mince. D'autre part, si le film de blocage est moins adhérent vis-à-vis le film mince que le film support, on fixe le film de blocage au film récepteur avant le dépôt du motif de lithium ou de ses alliages sur le film récepteur, et,lorsque le motif a été déposé sur le film récepteur et que les découpes sont demeurées sur le film support, on enlève le film support entraînant par le fait même les découpes et on enlève finalement le film de blocage. On peut aussi fixer le film de blocage au film récepteur avant le dépôt du motif de lithium ou de ses alliages sur le film récepteur, et lorsque le motif a été déposé sur le film récepteur et que les découpes sont demeurées sur le film de blocage, on enlève le film de blocage et le film support entraînant les découpes. Le film de blocage est habituellement constitué d'une résine synthétique ou d'un film métallique. De préférence, le film de blocage est constitué d'une résine synthétique à base de polypropylène, de polyester, de polysulfone, de polyéthylène ou de polyétherimide.

Selon une autre réalisation préférée de l'invention, on enduit le film récepteur d'une colle conductrice aux endroits où le motif de film mince doit être transféré sur le film récepteur. La colle conductrice recouvre alors des surfaces du film récepteur correspondant audit motif, de façon à promouvoir l'adhésion entre le film mince et le film récepteur.

On peut aussi appliquer un traitement local au film récepteur sur des portions de surface correspondant au motif, de façon à promouvoir l'adhésion entre le film mince et le film récepteur.

Selon une autre réalisation de l'invention, le film récepteur est constitué d'un film métallique ou métallisé ou ayant une bonne adhésion avec le film mince et sur lequel on a prévu des zones ayant une adhérence plus faible vis-à-vis le lithium pour former le motif dans les zones de bonne adhésion. Dans ce cas, le film récepteur est normalement constitué d'un film métallique. On peut aussi préparer les zones de plus faible adhérence sur le film métallique en fixant un film de blocage sur ce dernier aux zones de faible adhérence, le film de blocage étant alors constitué par une résine synthétique à base de polypropylène ou de polyéthylène.

Selon une autre réalisation préférée de l'invention, le film récepteur est à base de résine synthétique et comporte des zones de faible adhérence avec le lithium et des zones de faible adhérence plus forte vis-à-vis le lithium, ces dernières étant destinées à recevoir les motifs. On peut aussi obtenir les zones ayant une adhérence plus forte vis-à-vis le lithium en déposant sur le film récepteur un film de blocage comportant des fenêtres de même géométrie que lesdits motifs, le film de blocage pouvant alors être constitué de film métallique ou métallisé ou des polyester, polysulfone, polyéthylène, ou polyétherimide ou un mélange de ces derniers, les découpes se retrouvant dorénavant sur le film de blocage et les motifs sur le film récepteur.

Selon une autre réalisation préférée de l'invention, on introduit entre l'ensemble film support film mince et le film récepteur un film de blocage comportant des fenêtres correspondant à la surface desdits motifs, ledit film de blocage étant non adhérent vis-à-vis le lithium ou ses alliages de façon à permettre audit film de blocage d'évacuer les découpes tout en laissant un motif de lithium ou ses alliages.

Selon une autre réalisation préférée de l'invention, on prépare un film de blocage en disposant sur un film ayant une grande affinité pour le lithium ou ses alliages, des morceaux de film non adhérent vis-à-vis le lithium ou ses alliages et correspondant auxdits motifs. On presse.alors le film de blocage contre l'ensemble film support film mince, laissant les motifs sur le film support, et permettant d'évacuer les découpes qui sont fixées au film de blocage.

Lorsqu'on utilise un film métallique, ce dernier est ordinairement à base d'acier inoxydable, de nickel, de fer, de molybdène, de chrome, d'or, d'argent ou de leurs alliages.

Selon une autre réalisation préférée de l'invention, le film récepteur comprend un film de plastique non adhérent par rapport au lithium ou ses alliages, et le film de plastique comporte une couche de métal, cette dernière étant de préférence compatible avec le lithium et ses alliages et choisie parmi le nickel, le fer, le molybdène, le chrome, l'or, l'argent, le platine ou leurs alliages.

Selon une autre réalisation préférée de l'invention, on interpose un film de blocage comportant des fenêtres de même dimension que les motifs entre le film mince et le film récepteur, et l'on presse l'ensemble de sorte que les motifs sont transférés au film récepteur via lesdites fenêtres alors que les découpes sont évacuées par le film de blocage. De préférence, on presse l'ensemble entre des rouleaux dont la surface n'est pas adhérente vis-à-vis le lithium ou ses alliages, la largeur des rouleaux excédant celle des fenêtres prévues dans le film de blocage. Les rouleaux sont normalement fabriqués en un matériau non adhérent par rapport au lithium ou à ses alliages, ou ils possèdent un revêtement les rendant non adhérents par rapport au lithium ou ses alliages. Les découpes sont de préférence évacuées par le film de blocage grâce à l'adhésion du lithium sur le film de blocage. De façon alternative, l'ensemble que l'on presse entre des rouleaux comprend en outre un film protecteur que l'on introduit entre le film mince et l'un des rouleaux. Dans ce cas, le film protecteur n'est pas normalement adhérent vis-à-vis le lithium ou ses alliages.

Le film support sert à transporter le lithium vers le récepteur (collecteur de courant), permettre une découpe précise, et selon le cas évacuer le lithium excédentaire. On comprend que le procédé selon l'invention permet de produire des motifs de lithium mince avec précision ce que les méthodes traditionnelles ne peuvent faire. En plus le procédé permet d'évacuer les découpes. Dans le procédé selon l'invention, la forme du motif n'implique pas de restriction pour le procédé car la découpe peut aussi bien se faire sur la longueur que sur la largeur contrairement à d'autres systèmes où l'on doit avoir au moins une dimension exacte. Le procédé a aussi les avantages de pouvoir être réalisé en continu et d'une manière rapide. Il n'implique pas de lubrifiant qui pourrait polluer le lithium. Les couteaux ne sont pas nécessaires, il n'y a donc aucun risque d'accumulation de lithium, d'usure des lames, ou déformation du lithium. Dans le procédé, on ne pince pas le lithium pour le couper, il n'y a donc pas la déformation du lithium dûe à cette méthode de coupe.

Selon une réalisation préférée, la première étape du procédé consiste à accoler du lithium avec une adhésion contrôlée sur un support de plastique. L'accolement du lithium se fait en pressant le lithium par laminage sur un film support préférentiellement en plastique. L'accolement peut se faire entre deux films ayant une adhésion différente vis-à-vis le lithium ou entre un film collant et un rouleau moins collant que le film vis-à-vis du lithium. Dans les deux cas, le lithium demeure sur la surface ayant l'adhésion maximale vis-à-vis le lithium. On peut contrôler l'adhésion du lithium sur le film en variant la nature du film support (composition, fini de surface) et/ou la pression utilisée pour accoler le lithium et/ou le temps de résidence du lithium sur le film support.

Dans le procédé de production de motifs de lithium, ou un de ses alliages, on utilise une différence d'adhésion entre deux surfaces. La première surface permet notamment le transport du lithium vers la presse ou le laminoir, la coupe par cisaillement du lithium, et l'évacuation des découpes. La deuxième surface est celle qui reçoit les motifs de lithium. Ce film est préférentiellement constitué d'une surface métallique, et celle-ci peut jouer le rôle de collecteur de courant. Par surface métallique on comprend notamment les métallisations, les métallisations plaquées par un second métal, ou bien entendu les feuillards métalliques. L'adhésion du lithium doit être plus élevée sur la surface qui reçoit les motifs de lithium que sur la surface qui transporte le lithium, de façon à permettre le transfert et la découpe du lithium de la première surface vers la deuxième. Cependant, l'adhésion sur le premier film doit être suffisante pour permettre une séparation nette du film de lithium. Le différentiel d'adhésion peut être obtenu en bloquant l'adhésion en certains endroits et/ou en favorisant l'adhésion aux endroits où on désire avoir du lithium. Le blocage de l'adhésion peut se faire en utilisant des gravures (dépression).

Selon une autre réalisation préférée de l'invention, on applique localement une colle sur le film récepteur aux endroits où le film de blocage est disposé sur le film récepteur. On peut aussi appliquer une colle sur toute la surface du film de blocage préalablement disposé sur ledit film récepteur de façon à rendre le film de blocage adhérent vis-à-vis le film mince.

Le film récepteur est alors de préférence un film métallique ou un film plastique métallisé localement ou sur toute sa surface.

Selon une autre réalisation de l'invention, on peut aussi préparer des petits motifs situées les uns aux côtés des autres pour former en plus grand motif sur un des rouleaux pour ne pas avoir de pression où le transfert ne doit pas se faire; en utilisant une presse et en ne pressant que les zones définissant le motif; en utilisant un film intermédiaire avec des ouvertures correspondantes aux motifs, la pression peut être appliquée avec un laminoir ou une presse, en utilisant un vernis, une peinture ou tout autre recouvrement qui inhibe l'adhésion du lithium ou un de ses alliages sur le deuxième film. On peut favoriser l'adhésion en utilisant une modification locale de la surface par méthode mécanique sur une section ou sur toute la surface (abrasion, métallisation) ou par méthode chimique. Une combinaison de ces méthodes peut être utilisée.

Selon une autre réalisation de l'invention on peut effectuer le transfert des motifs de lithium ou de ses alliages en mettant en contact avec un film collant la combinaison de film mince récepteur que l'on soumet à une pression légère, faisant en sorte que les motifs se retrouvent sur le film récepteur et les découpes sur le film collant.

L'invention et ses avantages seront mieux compris à la lecture des exemples suivants de ses modes de réalisation, donnés à titre d'illustration et nullement limitatif en référence aux dessins annexés sur lesquels:

La FIGURE 1 représente une méthode d'accolage d'un film de lithium sur un support pelable en utilisant deux films plastiques.

La FIGURE 2 représente une méthode d'accolage d'un film de lithium sur support pelable en utilisant un rouleau non collant pour le lithium.

La FIGURE 3 représente le transfert sélectif du lithium sur un récepteur à l'aide d'un rouleau à motif.

La FIGURE 3a est une vue selon 3a-3a de la Figure 3.

La FIGURE 3b est une vue selon 3b-3b de la Figure 3.

La FIGURE 3c est une vue selon 3c-3c de la Figure 3.

La FIGURE 4 représente le transfert sélectif à l'aide d'une presse.

La FIGURE 4a est une vue selon 4a-4a de la Figure 4.

La FIGURE 4b est une vue selon 4b-4b de la Figure 4.

La FIGURE 4c est une vue selon 4c-4c de la Figure 4.

La FIGURE 5 représente le transfert sélectif du lithium sur un récepteur par laminage avec un masque.

La FIGURE 5a est une vue selon 5a-5a de la Figure 5.

La FIGURE 5b est une vue selon 5b-5b de la Figure 5.

La FIGURE 5c est une vue selon 5c-5c de la Figure 5.

La FIGURE 5d est une vue selon 5d-5d de la Figure 5.

La FIGURE 6 représente le transfert sélectif du lithium avec un récepteur ayant un masque permanent.

La FIGURE 6a est une vue selon 6a-6a de la Figure 6.

La FIGURE 6b est une vue selon 6b-6b de la Figure 6.

La FIGURE 6c est une vue selon 6c-6c de la Figure 6.

La FIGURE 6d est une vue selon 6d-6d de la Figure 6.

La FIGURE 7 représente le transfert sélectif du lithium avec un récepteur ayant des zones de différentes adhésions vis-à-vis le lithium.

La FIGURE 7a est une vue selon 7a-7a de la Figure 7.

La FIGURE 7b est une vue selon 7b-7b de la Figure 7.

La FIGURE 7c est une vue selon 7c-7c de la Figure 7.

La FIGURE 7d est une vue selon 7d-7d de la Figure 7.

La FIGURE 8 montre le lithium libre qui est positionné avec un masque et pressé à l'aide d'un rouleau non collant par rapport au lithium.

La FIGURE 8a est une vue selon 8a-8a de la Figure 8.

La FIGURE 8b est une vue selon 8b-8b de la Figure 8.

La FIGURE 8c est une vue selon 8c-8c de la Figure 8.

La FIGURE 9 montre le lithium libre qui est placé sur un masque et pressé sur un support avec un poinçon non collant vis-à-vis le lithium.

La FIGURE 9a est une vue selon 9a-9a de la Figure 9.

La FIGURE 9b est une vue selon 9b-9b de la Figure 9.

La FIGURE 9c est une vue selon 9c-9c de la Figure 9.

La FIGURE 10 représente le transfert sélectif par laminage du lithium avec un récepteur ayant un masque pelable, i.e. non-permanent.

La FIGURE 10a est une vue selon 10a-10a de la Figure 10.

La FIGURE 10b est une vue selon 10b-10b de la Figure 10.

La FIGURE 10c est une vue selon 10c-10c de la Figure 10.

La FIGURE 10d est une vue selon 10d-10d de la Figure 10.

La FIGURE 11 représente le transfert sélectif du lithium ayant un masque permanent, par laminage.

La FIGURE 11a est une vue selon 11a-11a de la Figure 11.

La FIGURE 11b est une vue selon 11b-11b de la Figure 11.

La FIGURE 11c est une vue selon 11c-11c de la Figure 11.

La FIGURE 11d est une vue selon 11d-11d de la Figure 11.

La FIGURE 12 montre le lithium accolé sur plastique qui est transféré à l'aide d'un rouleau sur une plaque formant un motif. Le plastique est ensuite pelé pour enlever les découpes de lithium.

La FIGURE 12a est une vue selon 12a-12a de la Figure 12.

La FIGURE 12b est une vue selon 12b-12b de la Figure 12.

La FIGURE 12c est une vue selon 12c-12c de la Figure 12.

La FIGURE 13 est une vue semblable à la Figure 3 sauf que le rouleau à motif ne fait que produire des adhésions différentes et que le transfert s'effectue entre deux autres rouleaux d'appui et un film récepteur de découpes.

La FIGURE 13a est une vue selon 13a-13a de la Figure 13.

La FIGURE 13b est une vue selon 13b-13b de la Figure 13.

La FIGURE 13c est une vue selon 13c-13c de la Figure 13.

La FIGURE 13d est une vue selon 13d-13d de la Figure 13.

La FIGURE 14 est une vue semblable à la Figure 13 sans film support de film de lithium.

La FIGURE 14a est une vue selon 14a-14a de la Figure 14.

La FIGURE 14b est une vue selon 14b-14b de la Figure 14.

La FIGURE 14c est une vue selon 14c-14c de la Figure 14.

La FIGURE 15 est une vue semblable à la Figure 14 sauf que l'on a remplacé le rouleau à motif et le rouleau d'appui correspondant par un poinçon et une base.

La FIGURE 15a est une vue selon 15a-15a de la Figure 15.

La FIGURE 15b est une vue selon 15b-15b de la Figure 15.

La FIGURE 15c est une vue selon 15c-15c de la Figure 15.

La FIGURE 16 est une vue semblable à la Figure 14 sauf que l'on a remplacé le rouleau à motifs par un dispositif capable de produire en ensemble de zones poinçonnées adjacentes les unes aux autres.

La FIGURE 16a est une vue selon 16a-16a de la Figure 16.

La FIGURE 16b est une vue selon 16b-16b de la Figure 16.

La FIGURE 17 est une vue semblable à la Figure 3 sauf que le film support fut enduit d'une colle sauf aux zones correspondantes aux motifs de lithium à produire.

La FIGURE 17a est une vue selon 17a-17a de la Figure 17.

La FIGURE 17b est une vue selon 17b-17b de la Figure 17.

La FIGURE 17c est une vue selon 17C-17c de la Figure 17.

La FIGURE 18 est une vue semblable à la Figure 17 sauf que l'on a remplacé le rouleau à motifs par un simple rouleau d'appui.

La FIGURE 18a est une vue selon 18a-18a de la Figure 18.

La FIGURE 18b est une vue selon 18b-18b de la Figure 18.

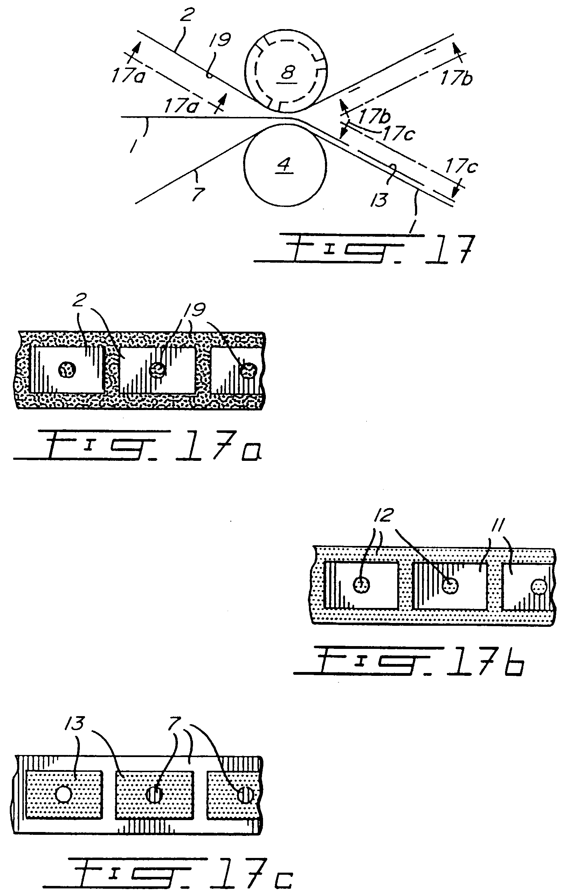

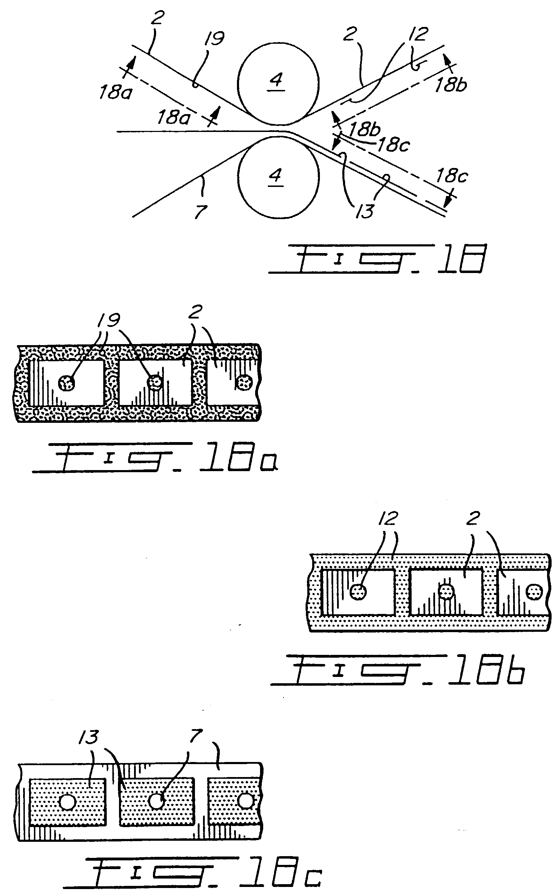

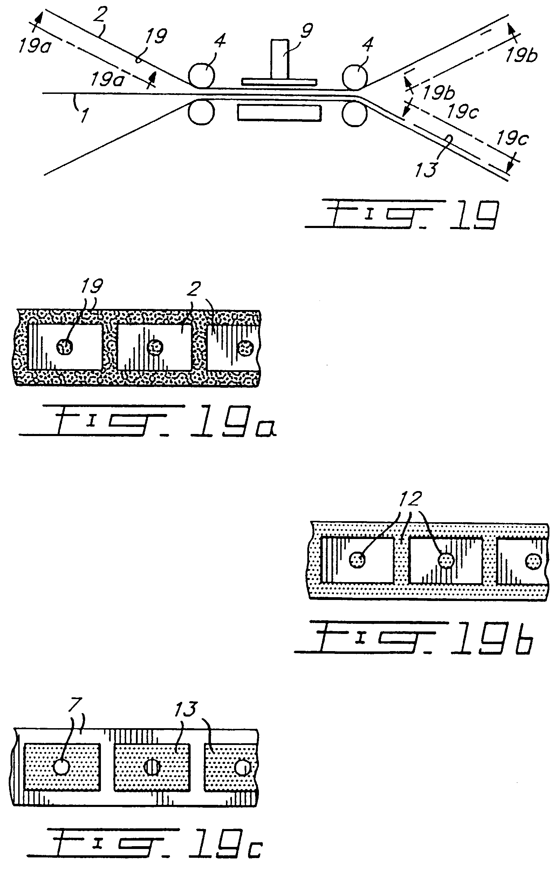

La FIGURE 18 c est une vue selon 18c-18c de la Figure 18.

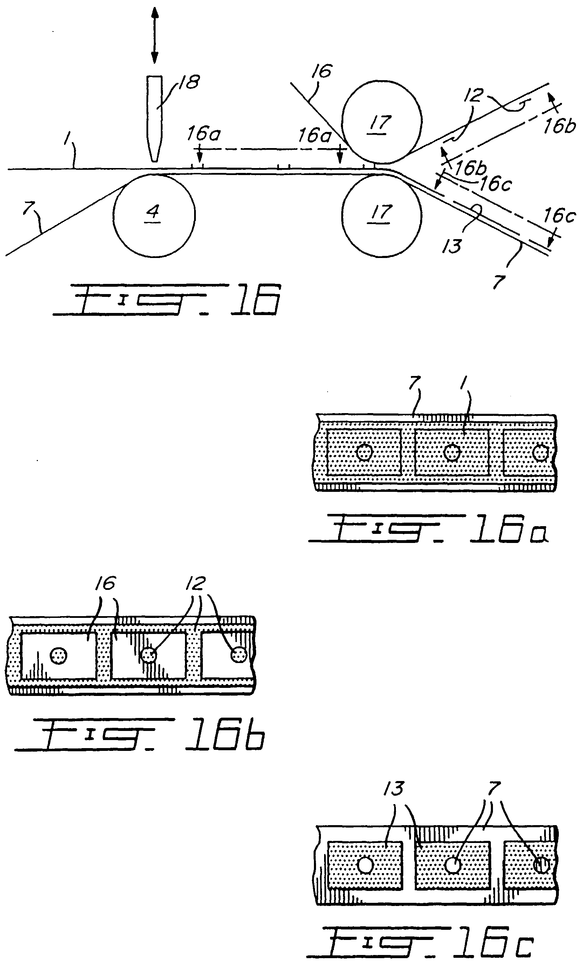

La FIGURE 19 est une vue semblable à la Figure 17 sauf que l'on a remplacé le rouleau à motifs et le rouleau d'appui correspondant respectivement par un poinçon et une base.

La FIGURE 19a est une vue selon 19a-19a de la Figure 19.

La FIGURE 19b est une vue selon 19b-19b de la Figure 19.

La FIGURE 19c est une vue selon 19c-19c de la Figure 19.

### Préparation du film lithium sur support pelable

La première étape pour la production de motifs consiste à placer le lithium ou un de ses alliages avec une adhésion contrôlée sur un support; le montage lithium sur un support est nommé lithium pelable. Des exemples de marche à suivre pour obtenir du lithium avec une adhésion contrôlée sur un support sont décrit ci-dessous.

### Exemple 1

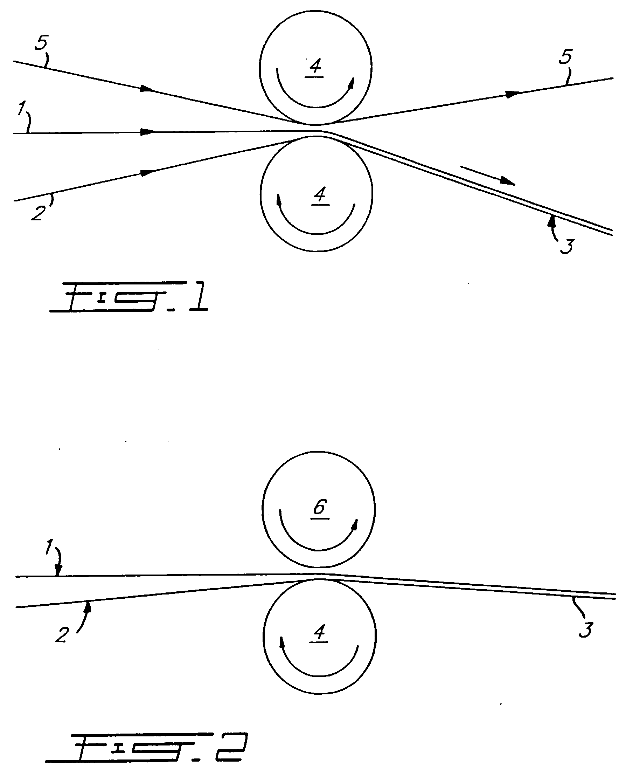

Comme on peut le voir à la Figure 1, on a accolé un film de lithium 1 entre deux films de plastique 2, 3 par laminage entre deux rouleaux 4. Un des deux films est plus réactif ou plus rugueux 2 que le deuxième 5, ce qui permet une adhésion préférentielle. Le deuxième film 5 non adhérent au lithium 1, appelé film de protection, est retiré tout de suite ou juste avant l'impression. Un exemple de film qui a été utilisé est un polypropylène pour le film collant 2 et un polyéthylène pour le film non collant 5.

### Exemple 2

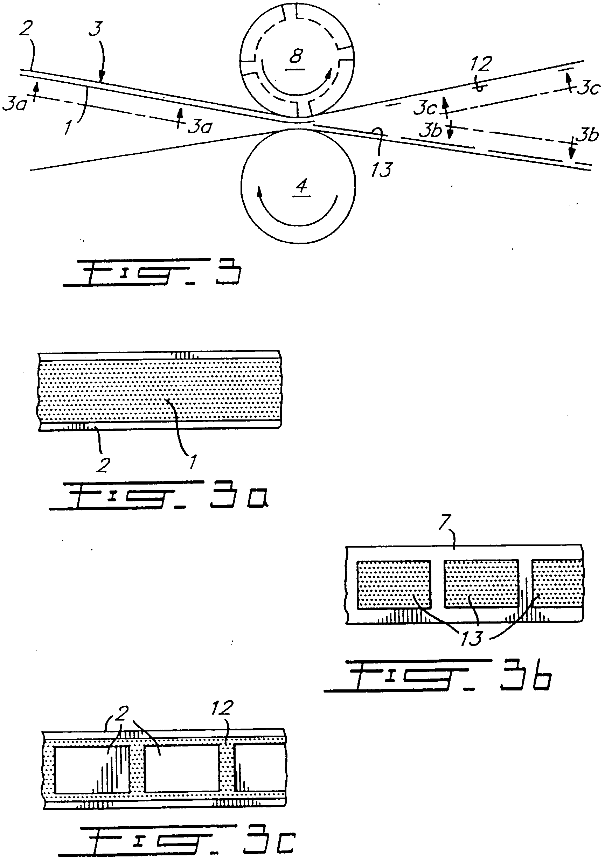

Comme on peut le voir à la Figure 2, on a accolé un film 1 sur un film de plastique 2 par laminage. On a utilisé un rouleau ayant une surface moins adhérente 6 que le film plastique 2 pour laminer. Cette façon de faire permet l'économie d'un film par rapport à la méthode précédente. Un exemple de matériau est un film de polypropylène pour le film collant 2 et un rouleau de polyéthylène pour le rouleau non collant 6.

### Transfert du lithium vers le support permanent

Le but de ces exemples donnés à titre non limitatif est de montrer comment accoler le lithium de façon permanente sur un support ayant une surface plastique ou métallique par laminage ou pressage. On montre aussi comment évacuer les découpes 12.

### Exemple 3

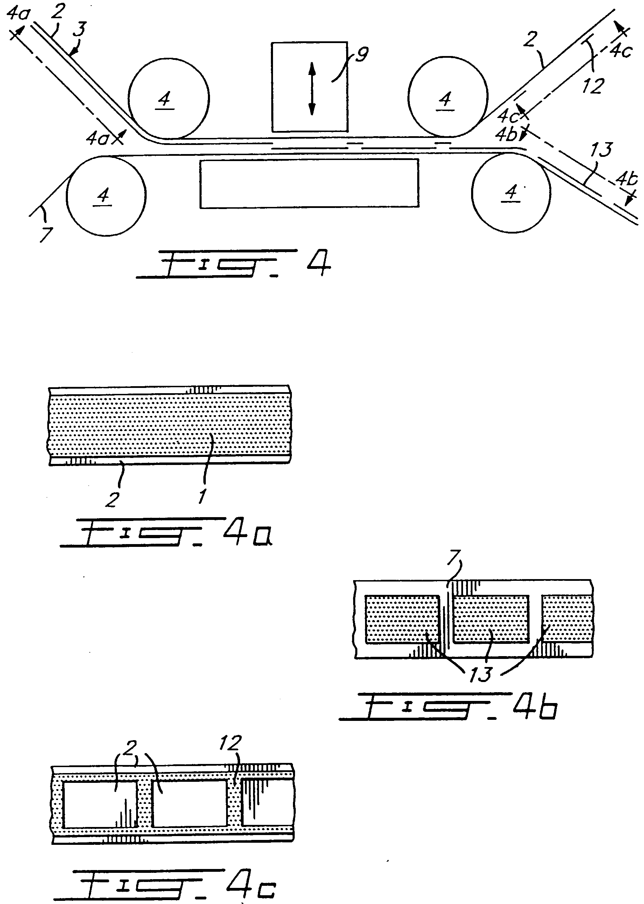

On montre, à la Figure 3, comment avec un rouleau gravé 8 on a pressé sélectivement le lithium 1 posé sur le film support 2. Le film support 2 était constitué de polypropylène, le récepteur 7 d'un film métallique ou ayant une surface métallisé. L'adhésion du lithium 1 était plus forte sur la surface métallique 7 que sur le support plastique 2, ce qui a permis le transfert du lithium sous forme de motif 13 et l'évacuation des découpes 12. La précision de découpe par cette méthode est supérieure à ± 0,5mm.

### Exemple 4

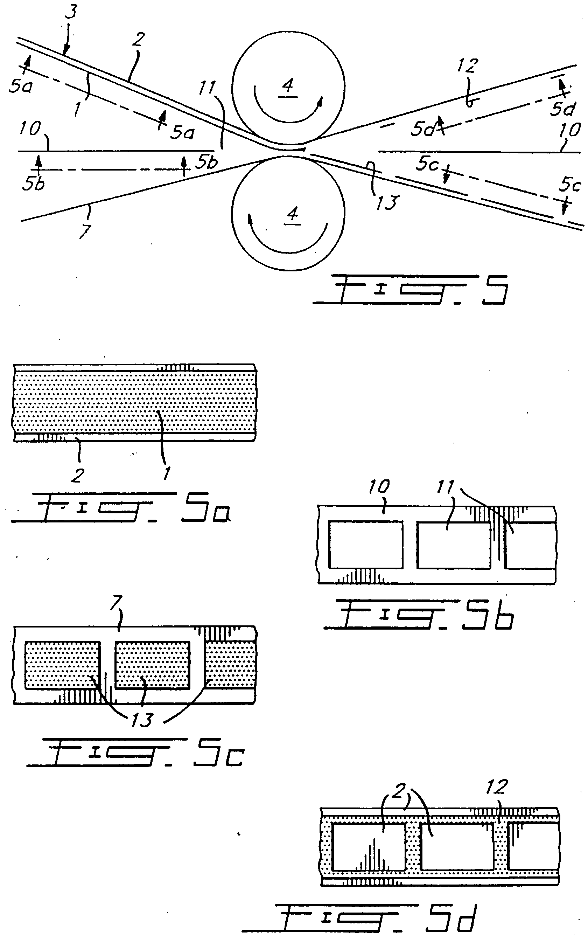

L'exemple 4, illustré par la Figure 4, est une variante de l'exemple 3 dans laquelle le rouleau à motifs 8 a été remplacé par une presse 9. Le lithium a été pressé pour former les motifs. Seule la zone pressée adhère au récepteur 7. Les découpes 12 ont été entraînées par le film support 2. La découpe du lithium s'est effectuée par différence d'adhésion. Pour le lithium plus épais (25 à 50 µm (microns)), une pression localisée (non illustrée sur les dessins) sur le pourtour du motif a été utilisée pour favoriser la découpe des motifs 13.

### Exemple 5

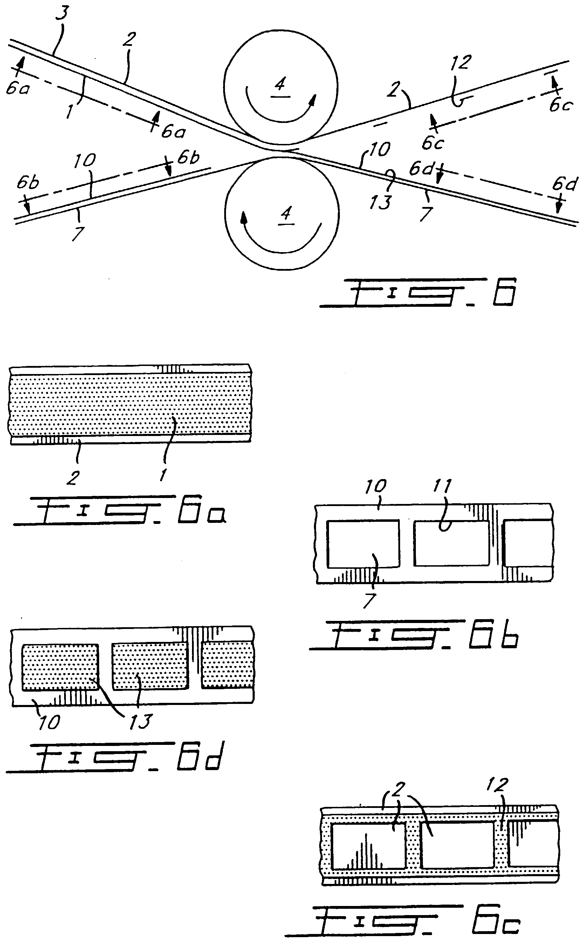

Dans la Figure 5, on montre comment un masque 10 a été utilisé pour découper le lithium par différence d'adhésion. Le masque 10 comportant des fenêtres 11 a été utilisé pour bloquer l'adhésion sur le récepteur 7. Les découpes 12 ont été entraînées sur le masque 10 ou sur le support 2. Si le masque 10 est fait de polyéthylène les découpes auront tendance à demeurer sur le support 2. Si le masque 10 est métallique ou d'un plastique plus adhérent que le support vis-à-vis du lithium, les découpes demeurent sur le masque 10 (non illustré sur la Figure 5).

### Exemple 6

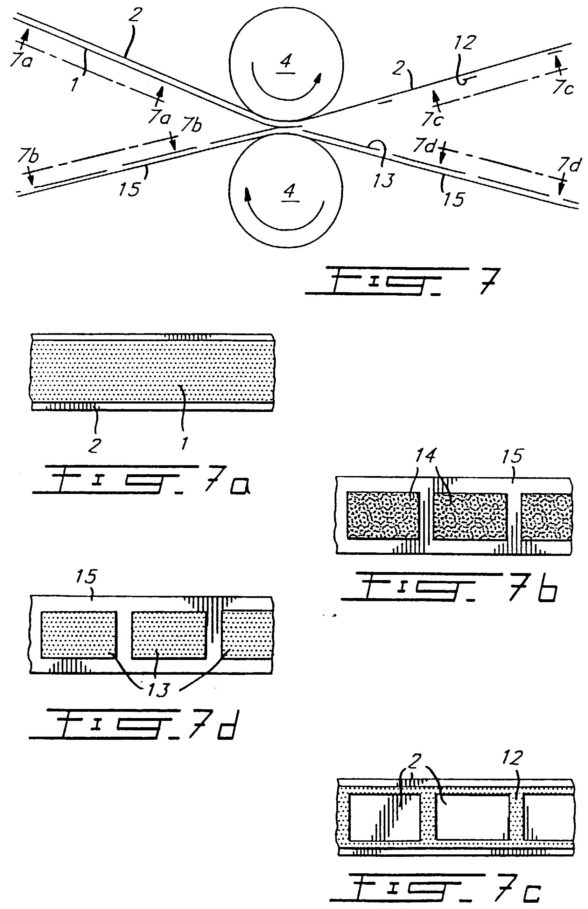

A la Figure 6, on montre qu'il est avantageux d'utiliser un masque avec des fenêtres 11 solidaire avec le récepteur 7. Ce masque 10 est non adhérent par rapport au lithium 1. Le masque 10 a été fabriqué avec du polypropylène collé sur le récepteur, mais on aurait pu utiliser tout autre matériau adéquat. Le masque 10 peut être utilisé pour sceller une éventuelle pile. Les découpes 12 ont été entraînées avec le support 2. Le motif 13 est positionné dans les fenêtres 11 du masque 10.

### Exemple 7

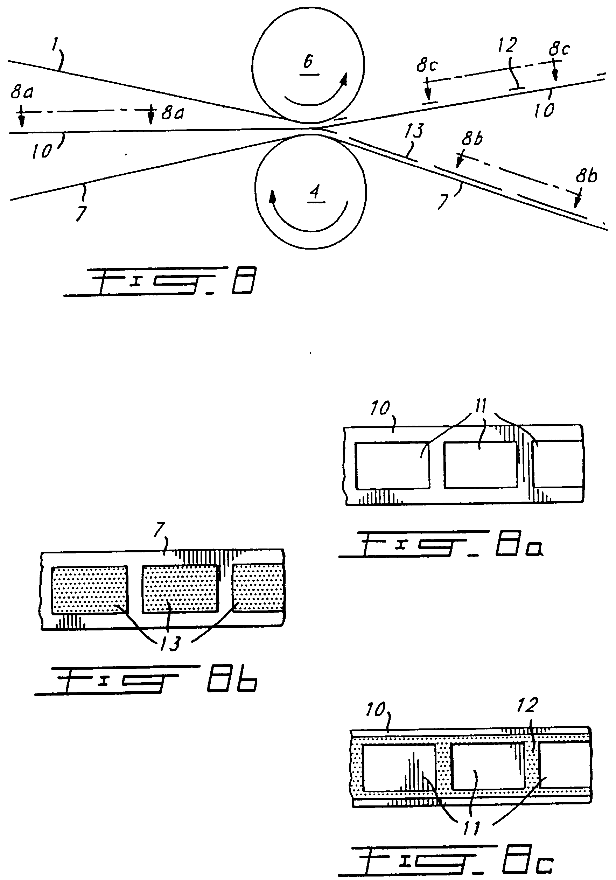

A la Figure 7, on montre qu'il a été possible de générer des zones d'adhésion différentielle sur des surfaces métallisées 14. Le principe a été d'utiliser la métallisation pour rendre collante vis-à-vis du lithium des surfaces 15 qui ne l'étaient pas originalement. Les découpes 12 demeurent sur le support 2 car l'adhésion sur les surfaces non métallisées 15 était plus faible que celle sur le support 2.

### Exemple 8

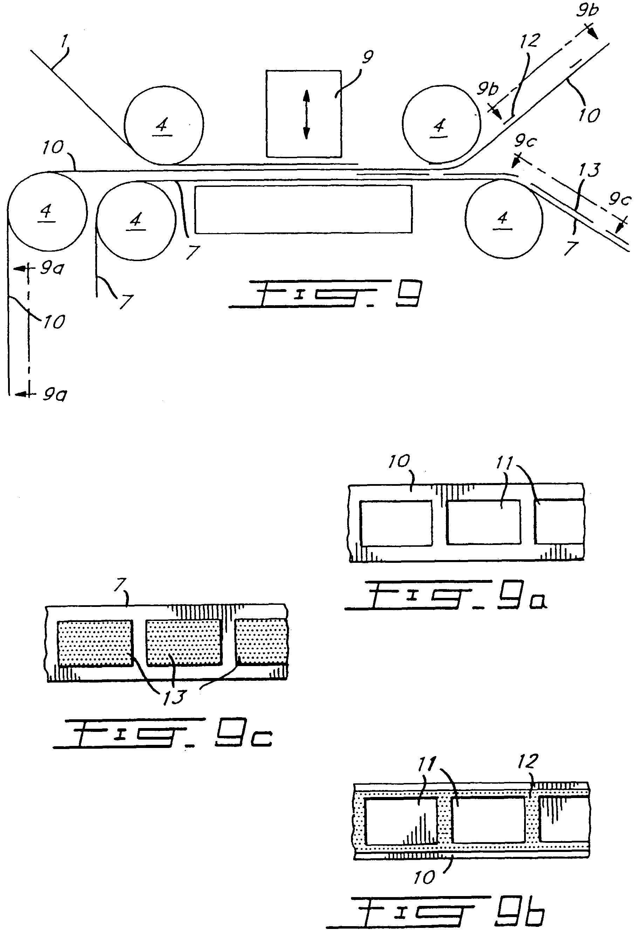

A la Figure 8, on montre comment on a accolé des motifs de lithium 13 d'épaisseurs de 30 à 50 µm (microns) à partir de lithium libre 1 sur un récepteur 7. Le lithium 1 a été laminé, à l'aide d'un rouleau non collant 6, en même temps qu'un masque 10 et que le récepteur 7. Les découpes 12 sont demeurées sur le masque 10. Les motifs de lithium 13 apparaissent sur le récepteur 7.

### Exemple 9

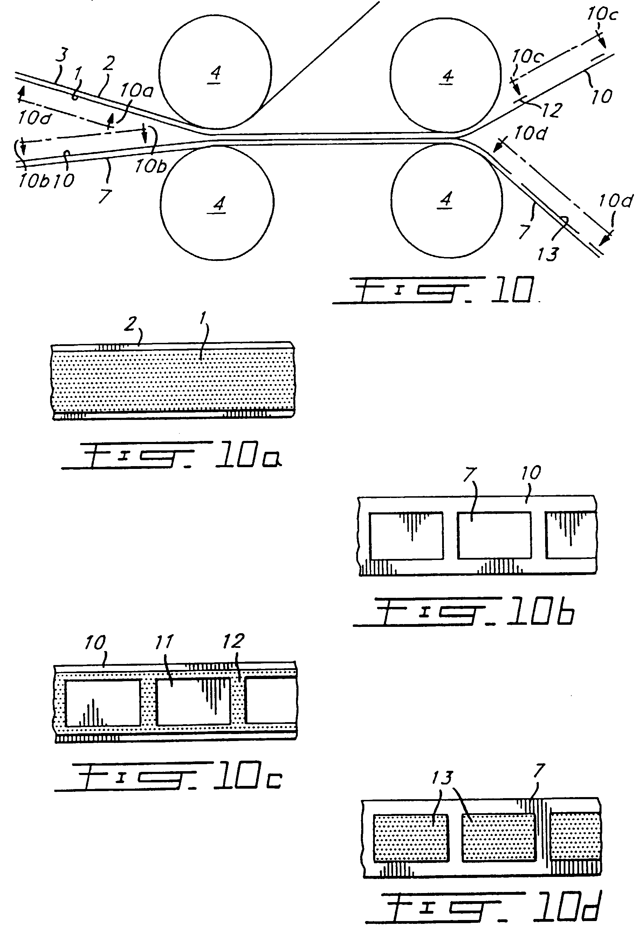

A la Figure 9, on a utilisé un empilement lithium 1, masque 10 et récepteur 7 pour produire les motifs 1 sur le récepteur 7. Pour ce faire, un poinçon non collant vis-à-vis du lithium, et plus large que la fenêtre 11 et que le motif 13 a été utilisé de façon à générer une bonne adhésion du masque 10 avec le lithium 1. Cette adhésion permet la coupe du lithium par déchirement.

### Exemple 10

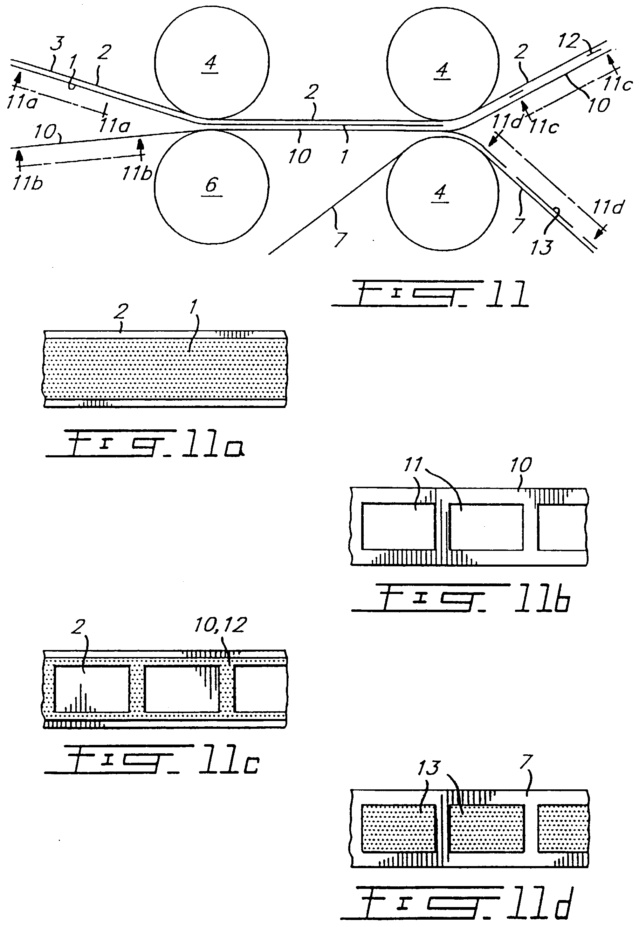

On montre, à la Figure 10, comment avec des rouleaux 4 on a pressé sélectivement le lithium posé sur le film support 7 ou libre selon l'épaisseur. Le film support 2 était constitué de polypropylène sur lequel du lithium 1 a été accolé, le récepteur 7 était un feuillard d'acier inoxydable sur lequel un masque de polyester 10 a été collé. Les films sont ensuite pressés puis le masque de polyester est enlevé entraînant avec lui les découpes de lithium 12 alors que les motifs 13 de lithium apparaissent sur le film récepteur 7.

### Exemple 11

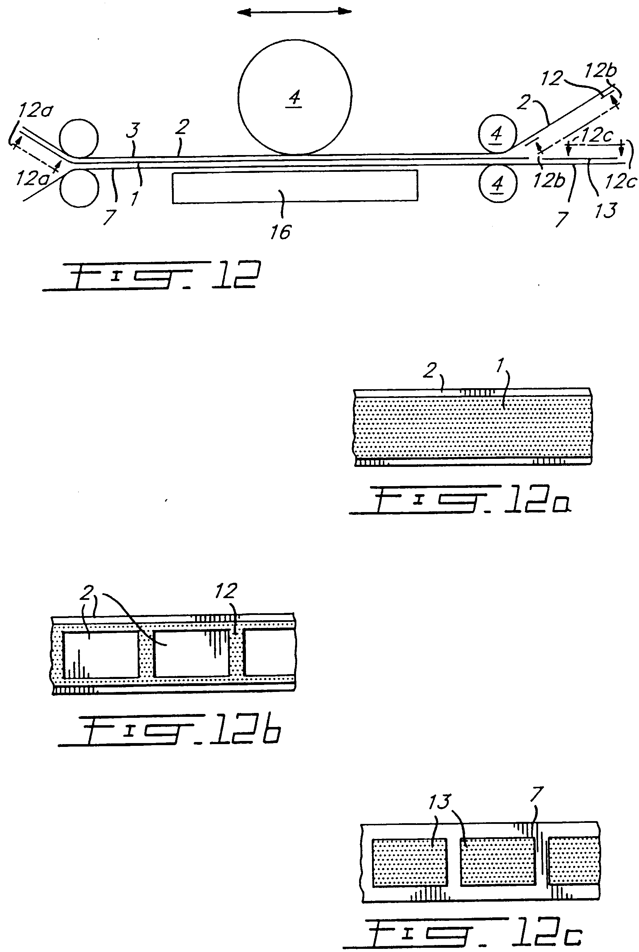

On montre, à la Figure 11, comment avec des rouleaux 4 collants et 6 non collants, on a pressé sélectivement le lithium posé sur le film support. Le film support 2 était constitué de polypropylène sur lequel du lithium 1 puis un masque de polyester 10 a été accolé; le récepteur 7 était un feuillard d'acier inoxydable. Les films sont ensuite pressés, le masque de polyester 10, le polypropylène 2 et les découpes 12 de lithium sont enlevés laissant le motif 13 de lithium sur l'acier inoxydable 7.

### Exemple 12

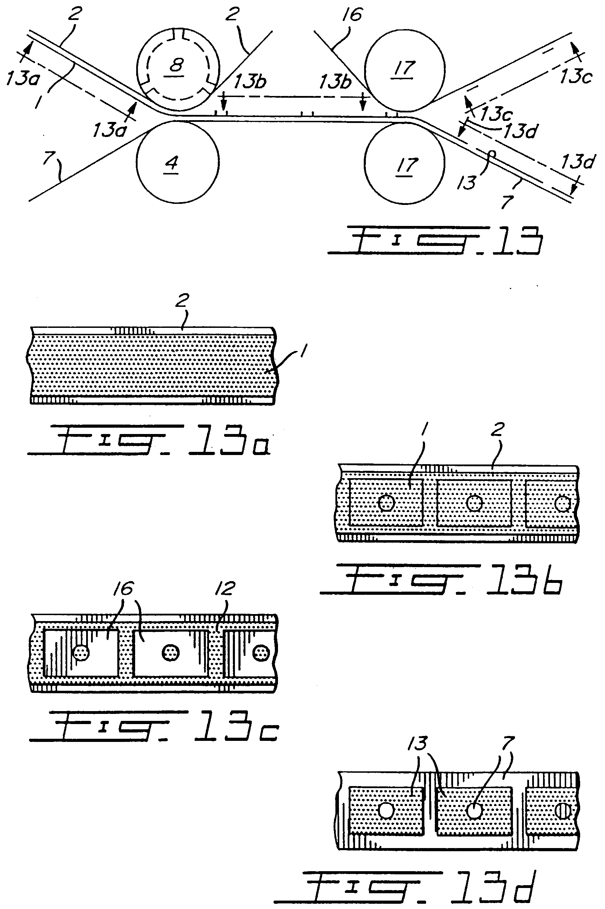

A la Figure 12, on a illustré comment on peut effectuer un transfert sélectif du lithium à l'aide d'une plaque 16 ayant la forme du motif. On place sur cette plaque 13 un film récepteur et un film de lithium accolé sur son film support 2. L'accolage se fait en faisant passer un rouleau 4 sur l'assemblage. La méthode s'apparente de près à celle utilisée pour facturer en utilisant une carte de crédit bancaire. Le mouvement du rouleau 4 par-dessus l'empilement de films sur la plaque 13 permet le transfert du lithium. En faisant avancer l'empilement lorsque le rouleau n'est plus au-dessus de la plaque, on positionne une nouvelle région du film qui sera transférée sur le récepteur. Après le transfert, on sépare le film support 2 et les découpes de lithium 12 du récepteur 7 pour ne laisser que les motifs de lithium 13 correspondant à la forme de la plaque.

### Exemple 13

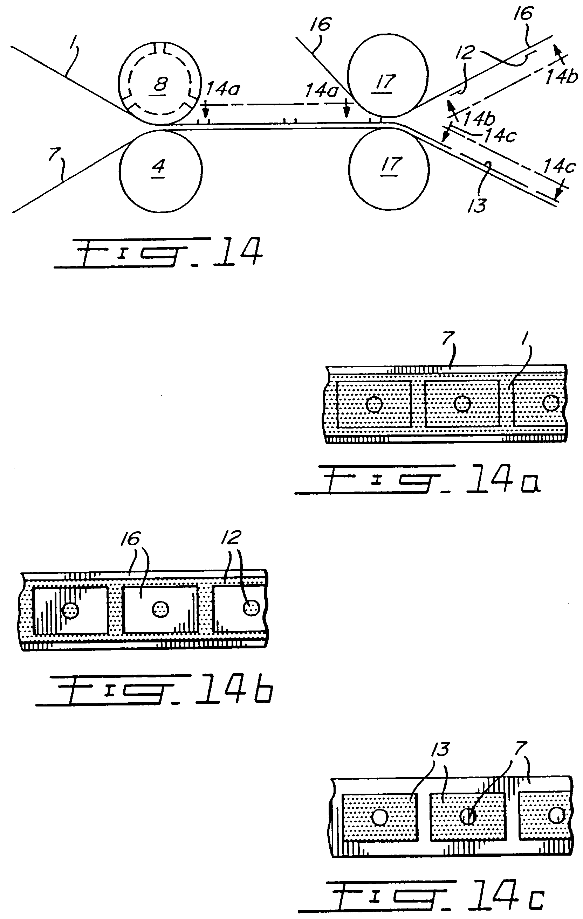

Comme on peut le voir à la Figure 13, on a accolé sélectivement un film de lithium 1 sur un film métallique 7 en acier inoxydable. On a utilisé un rouleau d'appui 4 et un rouleau 8 reproduisant le motif de lithium. Le rouleau 8 permet un pressage sélectif du film de lithium 1 sur le film métallique 7 et génère une adhésion forte entre la surface métallique 7 et les zones de lithium pressé (Figure 13b). Un plastique 2 a été utilisé pour empêcher le collement du lithium sur le rouleau à motifs 8. Ensuite, avec un film collant 16 mis en contact par une pression légère, en se servant des rouleaux 17, sur le lithium accolé sélectivement sur de l'acier inoxydable on a enlevé le lithium qui n'a pas été pressé (Figure 13c). Il en résulte que seul le lithium accolé fortement demeure sur la surface métallique 7 pour former les motifs 13 (Figure 13d). Les découpes se retrouvent sur le film collant 16 (Figure 13c). Pour réduire la quantité de rejet de lithium, le film support a été déplacé moins rapidement ou mis stationnaire dans les zones où il n'y a pas de lithium sur la largeur du film récepteur. Pendant ce temps, le film récepteur était avancé. Il est entendu que la pression a été retardée pendant que les films sont avancés à des vitesses différentes. Nous avons aussi utilisé du lithium de même largeur que la largeur maximale du motif pour réduire la quantité de rejet.

### Exemple 14

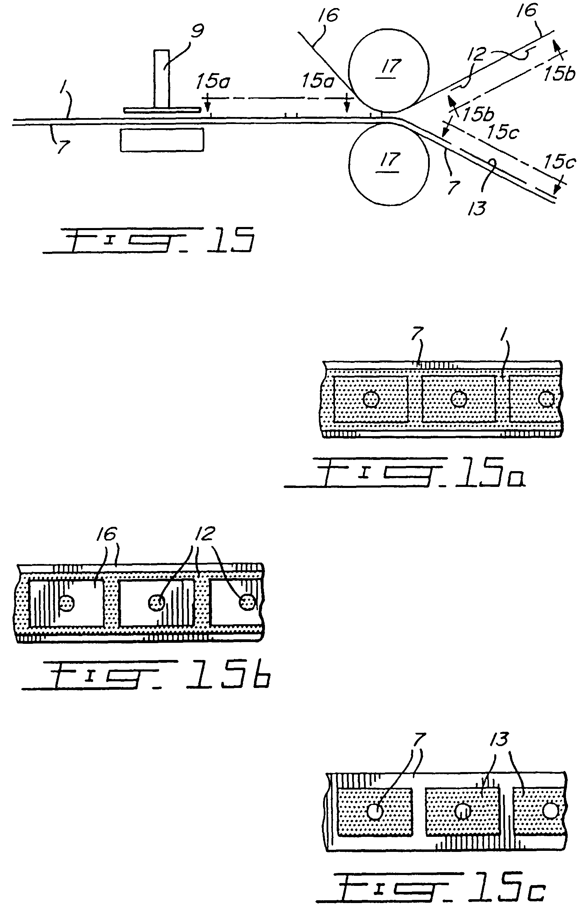

Comme on peut le voir à la Figure 14, on a accolé sélectivement un film de lithium 1 sur un film métallique 7 en acier inoxydable. On a utilisé un rouleau d'appui 4 et un rouleau 8 reproduisant le motif de lithium. Le rouleau 8 permet un pressage sélectif du film de lithium 1 sur le film métallique et génère une adhésion forte entre la surface métallique 7 et les zones de lithium pressé (Figure 14a). Un rouleau 8 à motifs, en plastique non adhérent au lithium a été utilisé. Ensuite on procède comme à l'exemple 13 et on obtient des motifs 13 accolés sur la surface métallique 7 (Figure 14c), les découpes se retrouvant sur le film collant 16 (Figure 14b).

### Exemple 15

Comme on peut le voir à la Figure 15, on a accolé sélectivement un film de lithium 1 sur un film métallique 7 en acier inoxydable. On a procédé comme à l'exemple 14 sauf qu'au lieu du rouleau à motifs en plastique non-adhérant 8, et un rouleau d'appui 4, on a respectivement utilisé un poinçon 9 et une base d'appui. On a obtenu les mêmes motifs 13 que dans l'exemple 14.

### Exemple 16

Comme on peut le voir à la Figure 16, on a accolé sélectivement un film de lithium 1 sur un film métallique 7 en acier inoxydable. On a procédé comme à l'exemple 14 sauf qu'au lieu du rouleau à motifs en plastique non adhérent 8, on a utilisé un dispositif 18 capable de produire un ensemble de zones poinçonnées adjacentes les unes aux autres. On a obtenu les mêmes motifs 13 que dans l'exemple 14.

### Exemple 17

Comme on peut le voir à la Figure 17, on a accolé sélectivement un film de lithium 1 sur un film métallique en acier inoxydable. Le film support 2 a été enduit d'une colle 19 sauf aux zones correspondantes aux motifs 14. On déroule le film support 2, le film de lithium 1 et le film récepteur 7 en acier inoxydable entre un rouleau gravé 8 dans lequel les zones de pressions correspondent aux zones non collées du support 2, et un rouleau d'appui 4 comme à l'exemple 3. Les motifs pressés 13 demeurent sur le film 7 tandis que les découpes 12 se retrouvent sur le film support 2 adhérentes à la colle 19.

### Exemple 18

En procédant comme à l'exemple 17, mais en utilisant un simple rouleau d'appui au lieu du rouleau 8 on a obtenu les mêmes résultats en ajustant la pression à l'intérieur de limites précises, comme illustré à la Figure 18.

### Exemple 19

On a procédé comme à l'exemple 17, mais on a remplacé le rouleau gravé 8 et le rouleau d'appui respectivement par un poinçon 9 et une base. On a obtenu les mêmes résultats comme on le voit sur la Figure 19.

### Exemple 20

On a procédé comme à l'exemple 17, mais on a remplacé le rouleau gravé 8 par un dispositif capable de produire un ensemble de zones poinçonnées adjacentes les unes aux autres. On a obtenu les mêmes résultats qu'à l'exemple 17.

Dans la description et les exemples, il est entendu que lorsqu'on se sert de lithium on pourrait tout aussi bien utiliser un alliage de ce dernier.

## Revendications

1. Procédé d'assemblage d'électrodes minces de lithium métallique ou d'un de ses alliages, selon lequel on prépare lesdites électrodes à partir de motifs obtenus d'un film mince de lithium ou d'un de ses alliages préalablement découpés selon des formes géométriques et des dimensions prédéterminées, lesdits motifs étant ensuite transférés sur un film récepteur, **caractérisé en ce que** l'on déroule simultanément ledit film mince et ledit film récepteur jusqu'à ce qu'ils puissent venir en contact l'un avec l'autre, et que l'on découpe alors lesdits motifs en exerçant une pression sur les deux films aux endroits où le transfert doit s'effectuer, laquelle pression étant suffisante pour faire adhérer lesdits motifs dudit film mince audit récepteur, cette opération s'effectuant pendant un déroulement continu des deux dits films alors qu'ils sont placés pour venir en contact l'un avec l'autre, et étant suivie d'une séparation des deux dits films, les motifs formés adhérant au récepteur et ce qui reste dudit film mince s'en détachant.

2. Procédé selon la revendication 1, caractérisé en ce que ledit film mince est en contact avec un élément dont l'adhésion avec ledit film mince est moindre que celle existant entre ledit film mince et ledit récepteur.

3. Procédé selon la revendication 2, caractérisé en ce que l'élément en contact avec ledit film mince est constitué par un film support.

4. Procédé selon la revendication 2, caractérisé en ce que l'élément en contact avec ledit film mince est constitué par un rouleau non adhérent par rapport audit film.

5. Procédé selon la revendication 2, caractérisé en ce que l'élément en contact avec ledit film mince est constitué par un poinçon non adhérent par rapport audit film.

6. Procédé selon la revendication 1, caractérisé en ce que l'élément en contact avec ledit film mince est constitué par un organe capable de produire un ensemble de zones poinçonnées adjacentes les unes aux autres.

7. Procédé selon la revendication 3, caractérisé en ce que l'on effectue le transfert dudit film mince en mettant ledit film mince en contact avec ledit film récepteur tout en exerçant une pression sur ledit film mince faisant en sorte que ledit film mince se détachera dudit élément pour adhérer audit film récepteur.

8. Procédé selon la revendication 1, caractérisé en ce que l'on découpe lesdits motifs en bloquant localement l'adhésion entre ledit film mince et ledit film récepteur.

9. Procédé selon la revendication 1, caractérisé en ce que ledit film récepteur comporte des promoteurs d'adhésion découpés selon la géométrie desdits motifs et destinés à recevoir par transfert du film mince découpé selon lesdits motifs.

10. Procédé selon la revendication 2, caractérisé en ce que l'on applique une pression suffisante sur le film support et le film mince pour les juxtaposer avec adhésion contrôlée.

11. Procédé selon la revendication 10, caractérisé en ce qu'on augmente la force d'adhésion entre les deux films en utilisant un promoteur d'adhésion.

12. Procédé selon la revendication 10, caractérisé en ce qu'on amoindrit la force d'adhésion entre les deux films en utilisant un inhibiteur d'adhésion.

13. Procédé selon la revendication 2, caractérisé en ce que le film support est constitué d'une résine synthétique inerte vis-à-vis le lithium et ses alliages.

14. Procédé selon la revendication 13, caractérisé en ce que la résine synthétique est sous forme de film à base de polypropylène, de polyéthylène ou d'un mélange de ces résines.

15. Procédé selon la revendication 7, caractérisé en ce que l'on génère la première pression en appliquant un rouleau ayant en relief le modèle du motif à produire contre la surface du film support libre de lithium ou de ses alliages.

16. Procédé selon la revendication 7, caractérisé en ce que l'on génère la première pression en appliquant un poinçon dont la dimension correspond à celle du motif à produire contre la surface du film support libre de lithium ou de ses alliages.

17. Procédé selon la revendication 7, caractérisé en ce que l'on génère la pression en appliquant un organe capable de produire un ensemble de zones poinçonnées adjacentes les unes aux autres, la dimension de l'ensemble des zones correspondant à celle du motif à produire contre la surface du film support libre de lithium ou de ses alliages.

18. Procédé selon la revendication 17, caractérisé en ce que l'on génère la première pression en faisant déplacer un rouleau sur une plaque comportant en relief au moins un motif à produire et sur laquelle repose le film récepteur, qu'on fait avancer pour un nouveau découpage après obtention dudit motif.

19. Procédé selon la revendication 3 , caractérisé en ce que l'on dispose un film de blocage entre l'ensemble film support film mince et le film récepteur de façon à prévenir tout contact entre le lithium ou ses alliages et le film récepteur aux zones du film récepteur situées hors de la zone où le motif doit être transféré.

20. Procédé selon la revendication 19, caractérisé en ce que le film de blocage est plus adhérent vis-à-vis ledit film mince que le film support, l'on fixe le film de blocage au film récepteur avant le dépôt du motif de lithium ou de ses alliages sur ledit film récepteur, et lorsque le motif a été déposé sur le film récepteur et que les découpes ont été transférées sur le film de blocage, on enlève ledit film de blocage, ce dernier entraînant des découpes de films minces.

21. Procédé selon la revendication 19, caractérisé en ce que le film de blocage est moins adhérent vis-à-vis ledit film mince que le film support, l'on fixe le film de blocage au film récepteur avant le dépôt du motif de lithium ou de ses alliages sur ledit film récepteur, et lorsque le motif a été déposé sur le film récepteur et que les découpes sont demeurées sur le film support, on enlève le film support entraînant par le fait même les découpes et on enlève finalement le film de blocage.

22. Procédé selon la revendication 20, caractérisé en ce que le film de blocage est moins adhérent vis-à-vis ledit film mince que le film support, l'on fixe le film de blocage au film récepteur avant ledépôt du film de lithium ou des alliages sur ledit film récepteur, et que lorsque le motif a été déposé sur le film récepteur et que les découpes sont demeurées sur le film de blocage, on enlève le film de blocage et le film support entraînant les découpes.

23. Procédé selon la revendication 21, caractérisé en ce que le film de blocage est constitué d'une résine synthétique ou d'un film métallique.

24. Procédé selon la revendication 23, caractérisé en ce que le film de blocage est constitué d'une résine synthétique à base de polypropylène, de polyester, de polysulfone, de polyéthylène ou de polyétherimide.

25. Procédé selon la revendication 1, caractérisé en ce que l'on enduit le film récepteur d'une colle conductrice aux endroits où le motif de film mince doit être transféré sur le film récepteur, ladite colle conductrice recouvrant des surfaces dudit film récepteur correspondant audit motif, de façon à promouvoir l'adhésion entre le film mince et le film récepteur.

26. Procédé selon la revendication 1, caractérisé en ce que l'on applique un traitement local audit film récepteur sur des portions de surface correspondant audit motif, de façon à promouvoir l'adhésion entre le film mince et le film récepteur.

27. Procédé selon la revendication 1, caractérisé en ce que le film récepteur est constitué d'un film métallique ou métallisé ou ayant une bonne adhésion avec le film mince et sur lequel on a prévu des zones ayant une adhérence plus faible vis-à-vis le lithium pour former ledit motif dans les zones de bonne adhésion.

28. Procédé selon la revendication 27, caractérisé en ce que le film récepteur est constitué d'un film métallique.

29. Procédé selon la revendication 28, caractérisé en ce que l'on prépare les zones de plus faible adhérence sur ledit film métallique en fixant un film de blocage sur ce dernier auxdites zones de faible adhérence, ledit film de blocage étant constitué par une résine synthétique à base de polypropylène ou de polyéthylène.

30. Procédé selon la revendication 1, caractérisé en ce que le film récepteur est à base de résine synthétique et comporte des zones de faible adhérence avec le lithium et des zones ayant une adhérence plus forte vis-à-vis le lithium, ces dernières étant destinées à recevoir lesdits motifs.

31. Procédé selon la revendication 30, caractérisé en ce que l'on obtient les zones ayant une adhérence plus forte vis-à-vis le lithium en déposant sur le film récepteur un film de blocage comportant des fenêtres de même géométrie que lesdits motifs, ledit film de blocage étant constitué de film métallique ou métallisé ou de polyester, polysulfone, polyéthylène, ou polyétherimide ou un mélange de ces derniers, les découpes se retrouvant alors sur le film de blocage et les motifs sur le film récepteur.

32. Procédé selon la revendication 2, caractérisé en ce que l'on introduit entre l'ensemble film support film mince et le film récepteur un film de blocage comportant des fenêtres correspondant à la surface desdits motifs, ledit film de blocage étant non adhérent vis-à-vis le lithium ou ses alliages, de façon à permettre audit film de blocage d'évacuer les découpes tout en laissant un motif de lithium ou ses alliages.

33. Procédé selon la revendication 3, caractérisé en ce que l'on prépare un film de blocage en disposant sur un film ayant une grande affinité pour le lithium ou ses alliages, des morceaux de film non adhérent vis-à-vis le lithium ou ses alliages et correspondant auxdits motifs, on presse ledit film de blocage contre ledit ensemble film support film mince, laissant lesdits motifs sur ledit film support, et permettant d'évacuer les découpes qui sont fixées au film de blocage.

34. Procédé selon la revendication 23, caractérisé en ce que le film métallique est à base d'acier inoxydable, de nickel, de fer, de molybdène, de chrome, d'or, d'argent ou de leurs alliages.

35. Procédé selon la revendication 1, caractérisé en ce que le film récepteur comprend un film de plastique non adhérent par rapport au lithium ou ses alliages, ledit film de plastique comportant une couche de métal.

36. Procédé selon la revendication 35, caractérisé en ce que ladite couche de métal est compatible avec le lithium et ses alliages et est choisie parmi le nickel, le fer, le molybdène, le chrome, l'or, l'argent, le platine ou leurs alliages.

37. Procédé selon la revendication 1, caractérisé en ce que l'on interpose un film de blocage comportant des fenêtres de même dimension que lesdits motifs entre ledit film mince et ledit film récepteur, et que l'on presse l'ensemble de sorte que lesdits motifs sont transférés audit film récepteur via lesdites fenêtres et que les découpes sont évacuées par ledit film de blocage.

38. Procédé selon la revendication 37, caractérisé en ce que l'on presse ledit ensemble entre des rouleaux dont la surface n'est pas adhérente vis-à-vis le lithium ou ses alliages, la largeur des rouleaux excède celle desdites fenêtres prévues dans ledit film de blocage.

39. Procédé selon la revendication 38, caractérisé en ce que lesdits rouleaux sont fabriqués en un matériau non adhérent par rapport au lithium ou à ses alliages.

40. Procédé selon la revendication 38, caractérisé en ce que lesdits rouleaux possèdent un revêtement les rendant non adhérents par rapport au lithium ou ses alliages.

41. Procédé selon la revendication 37, caractérisé en ce que les découpes sont évacuées par ledit film de blocage grâce à l'adhésion du lithium sur le film de blocage.

42. Procédé selon la revendication 39, caractérisé en ce que ledit ensemble que l'on presse entre les rouleaux comprend en outre un film protecteur que l'on introduit entre ledit film mince et l'un des rouleaux.

43. Procédé selon la revendication 42, caractérisé en ce que ledit film protecteur n'est pas adhérent vis-à-vis le lithium ou ses alliages.

44. Procédé selon la revendication 20, caractérisé en ce que l'on applique localement une colle sur le film récepteur aux endroits où ledit film de blocage est disposé sur ledit film récepteur.

45. Procédé selon la revendication 20, caractérisé en ce que l'on applique une colle sur toute la surface dudit film de blocage préalablement disposé sur ledit film récepteur de façon à rendre ledit film de blocage adhérent vis-à-vis ledit film mince.

46. Procédé selon l'une des revendications 37, 44 ou 45, caractérisé en ce que ledit film récepteur est un film métallique ou un film plastique métallisé localement ou sur toute sa surface.

47. Procédé selon l'une des revendications 18 ou 19, caractérisé en ce que l'on prépare des petits motifs situés les uns aux côtés des autres pour former un plus grand motif.

48. Procédé selon la revendication 15, caractérisé en ce que l'on sépare le film support du film mince dès après application dudit rouleau ayant en relief le modèle du film à produire, le film mince adhérant alors au film récepteur, la combinaison de ces deux derniers étant ensuite soumise à une pression légère avec mise en contact d'un film collant avec ledit film mince faisant en sorte que les motifs se retrouvent sur ledit film récepteur et les découpes sur ledit film collant.

49. Procédé selon la revendication 1, caractérisé en ce que l'on déroule simultanément ledit film mince et ledit film récepteur jusqu'à ce qu'ils puissent venir en contact l'un avec l'autre, l'on exerce alors une pression localisée sur les deux films en les faisant passer entre un premier et un second rouleau le premier rouleau étant mis en contact avec ledit film mince et ayant en relief, en matière non adhérente, le modèle du motif à produire, ledit modèle exerçant ladite pression localisée, le second rouleau étant en contact avec le film récepteur, ladite pression étant choisie pour générer une adhésion forte entre le film récepteur et les zones de film mince pressées, tandis que les zones non pressées n'adhèrent que légèrement entre elles sur un simple contact, on soumet ensuite la combinaison du film mince adhérent au film récepteur à une pression légère avec mise en contact d'un film collant avec ledit film mince faisant en sorte que les motifs se retrouvent sur ledit film récepteur et les découpes sur ledit film collant.

50. Procédé selon la revendication 1, caractérisé en ce que l'on déroule simultanément ledit film mince et ledit film récepteur jusqu'à ce qu'ils puissent venir en contact l'un avec l'autre, l'on exerce alors une pression localisée sur les deux films en les faisant passer entre un poinçon et une base, ledit poinçon étant en une matière non adhérente par rapport au film mince, ledit poinçon se situant du côté dudit film mince et ladite base du côté dudit film récepteur, la dimension dudit poinçon correspondant à celle du motif à produire, ledit poinçon correspondant à celle du motif à produire, ledit poinçon exerçant ladite pression localisée, laquelle est choisie pour générer une adhésion forte entre le film récepteur et les zones de film mince pressées, tandis que les zones non pressées n'adhèrent que légèrement entre elles sur simple contact, on soumet alors la combinaison du film mince adhérant au film récepteur à une pression légère avec mise en contact d'un film collant avec ledit film mince faisant en sorte que les motifs se retrouvent sur ledit film récepteur et les découpes sur ledit film collant.

51. Procédé selon la revendication 1, caractérisé en ce que l'on déroule simultanément ledit film mince et ledit film récepteur jusqu'à ce qu'ils puissent venir en contact l'un avec l'autre, l'on exerce alors une pression localisée entre les deux films en les faisant passer entre un dispositif capable de produire un ensemble de zones poinçonnées adjacentes les unes aux autres et un rouleau d'appui, ledit dispositif étant en une matière non adhérente par rapport au film mince, ledit dispositif exerçant ladite pression localisée par mise en contact avec ledit film mince pour produire ledit motif, ledit rouleau d'appui étant en contact avec le film récepteur, ladite pression étant choisie pour générer une adhésion forte entre le film récepteur et les zones de film mince pressées, tandis que les zones non pressées n'adhèrent que légèrement entre elles sur simple contact, on soumet ensuite la combinaison du film mince adhérant au film récepteur à une pression légère avec mise en contact d'un film collant avec ledit film mince faisant en sorte que les motifs se retrouvent sur ledit film récepteur et les découpes sur ledit film collant.

52. Procédé selon la revendication 6, 15, 16 ou 17, caractérisé en ce que l'on a préalablement enduit de colle la surface du film support destinée à venir en contact avec le film mince, sauf aux zones correspondant auxdits motifs, facilitant ainsi l'adhésion des découpes sur ledit film support.

53. Procédé selon la revendication 1, caractérisé en ce que l'on déroule ledit film mince et ledit film récepteur jusqu'à ce qu'ils puissent venir en contact l'un avec l'autre, l'on exerce alors une première pression localisée sur les deux films, ladite pression étant appliquée de préférence par un rouleau gravé, un poinçon ou un ensemble de zones poinçonnées, ladite deuxième pression étant de préférence plus faible que ladite première pression, les zones non pressées n'adhèrant que légèrement entre elles sur simple contact, on soumet alors la combinaison du film mince adhérant au film récepteur à une seconde pression inférieure à la première avec mise en contact d'un film collant par rapport au film mince faisant en sorte que les motifs demeurent sur ledit film récepteur et les découpes se retrouvent sur ledit film collant.

54. Procédé selon la revendication 50, 51, 52, ou 53, caractérisé en ce que l'élément servant à presser le lithium dans la zone du motif est collant par rapport au lithium, et l'on utilise un support non collant pour le lithium.

55. Procédé selon la revendication 48, caractérisé en ce que le film support se déplace moins rapidement ou est momentanément stationnaire dans les zones où il n'y a pas de lithium sur la largeur du film récepteur.

## Patentansprüche

1. Verfahren zum Zusammensetzen von dünnen Elektroden aus metallischem Lithium oder aus einer von dessen Legierungen, bei dem die Elektroden aus Motiven angefertigt werden, die aus einem dünnen Film aus Lithium oder aus einer von dessen Legierungen hergestellt werden, und die zuvor geometrischen Formen und vorbestimmten Abmessungen entsprechend geschnitten werden, wobei die Motive anschließend auf einen Rezeptorfilm übertragen werden, dadurch gekennzeichnet, daß der dünne Film und der Rezeptorfilm gleichzeitig abgewickelt werden, bis beide miteinander in Kontakt kommen können, und daß dann die Motive geschnitten werden, indem auf die beiden Filme an Stellen ein Druck ausgeübt wird, an denen die Übertragung bewirkt werden soll, wobei der Druck ausreichend ist, um die Motive des dünnen Filmes auf dem Rezeptorfilm anhaften zu lassen, wobei dieser Vorgang während eines fortlaufenden Abwickelns der beiden Filme durchgeführt wird, währenddessen diese so angeordnet sind, daß sie miteinander in Kontakt kommen, und wobei darauffolgend eine Trennung der beiden Filme erfolgt, wobei die gebildeten Motive an dem Rezeptorfilm anhaften und sich der übrige Teil des dünnen Filmes von diesem ablöst.

2. Verfahren nach Anspruch 1, dadurch gekennzeichnet, daß der dünne Film mit einem Element in Kontakt steht, dessen Adhäsion an dem dünnen Film geringer ist als diejenige, die zwischen dem dünnen Film und dem Rezeptorfilm herrscht.

3. Verfahren nach Anspruch 2, dadurch gekennzeichnet, daß das mit dem dünnen Film in Kontakt stehende Element aus einem Trägerfilm besteht.

4. Verfahren nach Anspruch 2, dadurch gekennzeichnet, daß das mit dem dünnen Film in Kontakt stehende Element aus einer Walze besteht, die bezüglich des Filmes nicht haftend ist.

5. Verfahren nach Anspruch 2, dadurch gekennzeichnet, daß das mit dem dünnen Film in Kontakt stehende Element aus einem Schnittstempel besteht, der bezüglich des Filmes nicht haftend ist.

6. Verfahren nach Anspruch 1, dadurch gekennzeichnet, daß das mit dem dünnen Film in Kontakt stehende Element aus einem Mittel besteht, mit dem eine Gruppe von einander benachbarten gestanzten Bereichen erzeugt werden kann.

7. Verfahren nach Anspruch 3, dadurch gekennzeichnet, daß das Übertragen des dünnen Filmes dadurch bewirkt wird, daß der dünne Film mit dem Rezeptorfilm in Kontakt gebracht wird, wobei auf den dünnen Film ein Druck derart ausgeübt wird, daß sich der dünne Film von dem Element ablöst, um an dem Rezeptorfilm anzuhaften.

8. Verfahren nach Anspruch 1, dadurch gekennzeichnet, daß die Motive geschnitten werden, indem die Adhäsion zwischen dem dünnen Film und dem Rezeptorfilm stellenweise blockiert wird.

9. Verfahren nach Anspruch 1, dadurch gekennzeichnet, daß der Rezeptorfilm Adhäsionspromotoren aufweist, die entsprechend der Geometrie der Motive geschnitten und dazu vorgesehen sind, die Motive entsprechend durch Übertragen des geschnittenen dünnen Filmes aufzunehmen.

10. Verfahren nach Anspruch 2, dadurch gekennzeichnet, daß auf den Trägerfilm und den dünnen Film ein ausreichender Druck angewendet wird, um diese mit kontrollierter Adhäsion aneinanderzulegen.

11. Verfahren nach Anspruch 10, dadurch gekennzeichnet, daß die Adhäsionskraft zwischen den beiden Filmen erhöht wird, indem ein Adhäsionspromotor verwendet wird.

12. Verfahren nach Anspruch 10, dadurch gekennzeichnet, daß die Adhäsionskraft zwischen den beiden Filmen verringert wird, indem ein Adhäsioninhibitor verwendet wird.

13. Verfahren nach Anspruch 2, dadurch gekennzeichnet, daß der Trägerfilm aus einem gegenüber Lithium und dessen Legierungen inerten synthetischen Harz besteht.

14. Verfahren nach Anspruch 13, dadurch gekennzeichnet, daß der synthetische Harz in Form eines Filmes auf der Basis von Polypropylen, Polyethylen oder einem Gemisch dieser Harze vorliegt.

15. Verfahren nach Anspruch 7, dadurch gekennzeichnet, daß der erste Druck erzeugt wird, indem eine Walze, die räumlich erhaben das Muster des zu erzeugenden Motivs aufweist, gegen die Oberfläche des Trägerfilms gedrückt wird, die frei von Lithium oder dessen Legierungen ist.

16. Verfahren nach Anspruch 7, dadurch gekennzeichnet, daß der erste Druck erzeugt wird, indem ein Schnittstempel, dessen Abmessung derjenigen des zu erzeugenden Motives entspricht, gegen die Oberfläche des Trägerfilmes gedrückt wird, die frei von Lithium oder dessen Legierungen ist.

17. Verfahren nach Anspruch 7, dadurch gekennzeichnet, daß der Druck erzeugt wird, indem ein Mittel, mit dem eine Gruppe von einander benachbarten gestanzten Bereichen erzeugt werden kann, gegen die Oberfläche des Trägerfilms gedrückt wird, die frei von Lithium oder dessen Legierungen ist, wobei die Abmessung der Gruppe der Bereiche derjenigen des zu erzeugenden Motivs entspricht.

18. Verfahren nach Anspruch 17, dadurch gekennzeichnet, daß der erste Druck erzeugt wird, indem eine Walze auf einer Platte bewegt wird, die räumlich erhaben zumindest ein zu erzeugendes Motiv aufweist, und auf der der Rezeptorfilm ruht, wobei dieser für ein erneutes Schneiden nach der Herstellung des Motives vorwärtsbewegt wird.

19. Verfahren nach Anspruch 3, dadurch gekennzeichnet, daß ein Blockierfilm zwischen der Gruppe aus Trägerfilm - dünnem Film und dem Rezeptorfilm derart angeordnet wird, daß jeglicher Kontakt zwischen dem Lithium oder dessen Legierungen und dem Rezeptorfilm in Bereichen des Rezeptorfilms vermieden wird, die außerhalb des Bereiches liegen, in dem das Motiv übertragen werden soll.

20. Verfahren nach Anspruch 19, dadurch gekennzeichnet, daß der Blockierfilm gegenüber dem dünnen Film stärker haftend ist als der Trägerfilm, daß der Blockierfilm auf dem Rezeptorfilm vor dem Aufbringen des Motives aus Lithium oder dessen Legierungen auf den Rezeptorfilm fixiert wird, und daß, wenn das Motiv auf dem Rezeptorfilm aufgebracht worden ist und die Schnittabfälle auf den Blockierfilm übertragen worden sind, der Blockierfilm abgehoben wird, wobei dieser die Schnittabfälle des dünnen Filmes mitnimmt.

21. Verfahren nach Anspruch 19, dadurch gekennzeichnet, daß der Blockierfilm gegenüber dem dünnen Film weniger haftend ist als der Trägerfilm, daß der Blockierfilm auf dem Rezeptorfilm vor dem Aufbringen des Motives aus Lithium oder dessen Legierungen auf den Rezeptorfilm fixiert wird, und daß, wenn das Motiv auf dem Rezeptorfilm aufgebracht worden ist und die Schnittabfälle auf dem Trägerfilm zurückgeblieben sind, der Trägerfilm abgehoben wird, der infolgedessen die Schnittabfälle mitnimmt, und daß schließlilch der Blockierfilm abgehoben wird.

22. Verfahren nach Anspruch 20, dadurch gekennzeichnet, daß der Blockierfilm gegenüber dem dünnen Film weniger haftend ist als der Trägerfilm, daß der Blockierfilm auf dem Rezeptorfilm vor dem Aufbringen des Filmes aus Lithium oder dessen Legierungen auf den Rezeptorfilm fixiert wird, und daß, wenn das Motiv auf dem Rezeptorfilm aufgebracht worden ist und die Schnittabfälle auf dem Blockierfilm zurückgeblieben sind, der Blockierfilm und der Trägerfilm, der die Abschnitte mitnimmt, abgehoben werden.

23. Verfahren nach Anspruch 21, dadurch gekennzeichnet, daß der Blockierfilm aus einem synthetischen Harz oder einem Metallfilm besteht.

24. Verfahren nach Anspruch 23, dadurch gekennzeichnet, daß der Blockierfilm aus einem synthetischen Harz auf der Basis von Polypropylen, Polyester, Polysulfon, Polyethylen oder Polyetherimid besteht.

25. Verfahren nach Anspruch 1, dadurch gekennzeichnet, daß der Rezeptorfilm mit einem leitenden Klebstoff an Stellen bestrichen wird, an denen das Motiv von dem dünnen Film auf den Rezeptorfilm übertragen werden soll, wobei der leitende Klebstoff dem Motiv entsprechende Oberflächen des Rezeptorfilmes überdeckt, wodurch die Adhäsion zwischen dem dünnen Film und dem Rezeptorfilm verstärkt wird.

26. Verfahren nach Anspruch 1, dadurch gekennzeichnet, daß dem Motiv entsprechende Oberflächenabschnitte des Rezeptorfilmes stellenweise derart behandelt werden, daß die Adhäsion zwischen dem dünnen Film und dem Rezeptorfilm verstärkt wird.

27. Verfahren nach Anspruch 1, dadurch gekennzeichnet, daß der Rezeptorfilm aus einem Metall- oder metallisierten oder einem eine hohe Adhäsion an dem dünnen Film aufweisenden Film besteht, auf dem Bereiche vorgesehen sind, die ein schwaches Haftvermögen gegenüber Lithium aufweisen, um das Motiv in den Bereichen hoher Adhäsion zu bilden.

28. Verfahren nach Anspruch 27, dadurch gekennzeichnet, daß der Rezeptorfilm aus einem Metallfilm besteht.

29. Verfahren nach Anspruch 28, dadurch gekennzeichnet, daß die Bereiche schwachen Haftvermögens auf dem Metallfilm vorgefertigt werden, indem auf diesem in den Bereichen schwachen Haftvermögens ein Blockierfilm fixiert wird, wobei der Blockierfilm aus einem synthetischen Harz auf der Basis von Polypropylen oder Polyethylen besteht.

30. Verfahren nach Anspruch 1, dadurch gekennzeichnet, daß der Rezeptorfilm auf der Basis eines synthetischen Harzes vorliegt und Bereiche schwachen Haftvermögens an Lithium sowie Bereiche aufweist, die ein gegenüber Lithium stärkeres Haftvermögen aufweisen, wobei die letzteren dazu vorgesehen sind, die Motive aufzunehmen.

31. Verfahren nach Anspruch 30, dadurch gekennzeichnet, daß die Bereiche mit einem gegenüber Lithium stärkeren Haftvermögen dadurch erhalten werden, daß auf den Rezeptorfilm ein Blockierfilm aufgebracht wird, der Fenster von derselben Geometrie wie die Motive aufweist, wobei der Blockierfilm aus einem Metall- oder einem metallisierten Film oder einem Polyester-, Polysulfon-, Polyethylen- oder Polyetherimidfilm oder einem Film aus einem Gemisch dieser letzteren besteht, wobei sich dann die Schnittabfälle auf dem Blockierfilm und die Motive auf dem Rezeptorfilm befinden.

32. Verfahren nach Anspruch 2, dadurch gekennzeichnet, daß zwischen die Gruppe aus Trägerfilm - dünnem Film und dem Rezeptorfilm ein Blockierfilm geführt wird, der der Oberfläche der Motive entsprechende Fenster aufweist, wobei der Blockierfilm gegenüber Lithium oder dessen Legierungen nicht haftend ist, derart, daß der Blockierfilm die Schnittabfälle wegführen kann, während ein Motiv aus Lithium oder dessen Legierungen zurückbleibt.

33. Verfahren nach Anspruch 3, dadurch gekennzeichnet, daß ein Blockierfilm angefertigt wird, indem auf einem Film mit einer hohen Affinität zu Lithium oder dessen Legierungen den Motiven entsprechende Stücke von einem gegenüber Lithium oder dessen Legierungen nicht haftenden Film angeordnet werden, und daß der Blockierfilm gegen die Gruppe aus Trägerfilm - dünnem Film gedrückt wird, wobei die Motive auf dem Trägerfilm zurückbleiben, und wobei die Schnittabfälle, die an dem Blockierfilm fixiert sind, weggeführt werden können.

34. Verfahren nach Anspruch 23, dadurch gekennzeichnet, daß der Metallfilm auf der Basis von Edelstahl, Nickel, Eisen, Molybdän, Chrom, Gold, Silber oder deren Legierungen vorliegt.

35. Verfahren nach Anspruch 1, dadurch gekennzeichnet, daß der Rezeptorfilm einen Kunststoffilm umfaßt, der bezüglich Lithium oder dessen Legierungen nicht haftend ist, wobei der Kunststoffilm eine Metallschicht aufweist.

36. Verfahren nach Anspruch 35, dadurch gekennzeichnet, daß die Metallschicht mit Lithium und dessen Legierungen verträglich ist und aus Nickel, Eisen, Molybdän, Chrom, Gold, Silber, Platin oder deren Legierungen ausgewählt ist.

37. Verfahren nach Anspruch 1, dadurch gekennzeichnet, daß zwischen den dünnen Film und den Rezeptorfilm ein Blockierfilm eingefügt wird, der Fenster von gleicher Abmessung wie die Motive aufweist, und daß die Gruppe derart zusammengedrückt wird, daß die Motive über die Fenster auf den Rezeptorfilm übertragen werden und die Schnittabfälle durch den Blockierfilm weggeführt werden.

38. Verfahren nach Anspruch 37, dadurch gekennzeichnet, daß die Gruppe zwischen Walzen zusammengedrückt wird, deren Oberfläche gegenüber Lithium oder dessen Legierungen nicht haftend ist, wobei die Breite der Walzen über diejenige der in dem Blockierfilm vorgesehenen Fenster hinausgeht.

39. Verfahren nach Anspruch 38, dadurch gekennzeichnet, daß die Walzen aus einem bezüglich Lithium oder dessen Legierungen nicht haftenden Material gefertigt sind.

40. Verfahren nach Anspruch 38, dadurch gekennzeichnet, daß die Walzen einen Überzug besitzen, durch den sie bezüglich Lithium oder dessen Legierungen nicht haftend werden.

41. Verfahren nach Anspruch 37, dadurch gekennzeichnet, daß die Schnittabfälle durch den Blockierfilm aufgrund der Adhäsion des Lithiums an dem Blockierfilm weggeführt werden.

42. Verfahren nach Anspruch 39, dadurch gekennzeichnet, daß die Gruppe, die zwischen den Walzen zusammengedrückt wird, außerdem einen Schutzfilm umfaßt, der zwischen den dünnen Film und eine der Walzen geführt wird.

43. Verfahren nach Anspruch 42, dadurch gekennzeichnet, daß der Schutzfilm gegenüber Lithium oder dessen Legierungen nicht haftend ist.

44. Verfahren nach Anspruch 20, dadurch gekennzeichnet, daß auf den Rezeptorfilm stellenweise ein Klebstoff an Stellen aufgetragen wird, wo der Blockierfilm auf dem Rezeptorfilm angeordnet ist.

45. Verfahren nach Anspruch 20, dadurch gekennzeichnet, daß auf die gesamte Oberfläche des Blockierfilms, der zuvor auf dem Rezeptorfilm angeordnet worden ist, ein Klebstoff aufgetragen wird, derart, daß der Blockierfilm gegenüber dem dünnen Film haftend wird.

46. Verfahren nach einem der Ansprüche 37, 44 oder 45, dadurch gekennzeichnet, daß der Rezeptorfilm ein Metallfilm oder ein stellenweise oder auf seiner gesamten Oberfläche metallisierter Kunststoffilm ist.

47. Verfahren nach Anspruch 18 oder 19, dadurch gekennzeichnet, daß kleine Seite an Seite liegende Motive angefertigt werden, um ein größeres Motiv zu bilden.

48. Verfahren nach Anspruch 15, dadurch gekennzeichnet, daß der Trägerfilm gleich nach dem Andrücken der Walze, die räumlich erhaben das Modell des zu erzeugenden Filmes aufweist, von dem dünnen Film getrennt wird, wobei der dünne Film dann an dem Rezeptorfilm anhaftet, und wobei das Gefüge dieser beiden letzteren anschließend einem leichten Druck unter in Kontaktbringen eines Klebfilms mit dem dünnen Film ausgesetzt wird, derart, daß sich die Motive auf dem Rezeptorfilm und die Schnittabfälle auf dem Klebfilm befinden.

49. Verfahren nach Anspruch 1, dadurch gekennzeichnet, daß der dünne Film und der Rezeptorfilm gleichzeitig abgewickelt werden, bis diese in Kontakt miteinander kommen können, daß dann ein lokaler Druck auf die beiden Filme ausgeübt wird, indem diese zwischen einer ersten und einer zweiten Walze durchgeführt werden, wobei die erste Walze, die räumlich erhaben aus einem nicht haftenden Material das Muster des zu erzeugenden Motives aufweist, in Kontakt mit dem dünnen Film gebracht wird, wobei das Muster den lokalen Druck ausübt, und wobei die zweite Walze mit dem Rezeptorfilm in Kontakt steht, wobei der Druck so gewählt wird, daß eine starke Adhäsion zwischen dem Rezeptorfilm und den angedrückten Bereichen des dünnen Filmes erzeugt wird, während die nicht angedrückten Bereiche nur leicht durch eine einfache Berührung aneinanderhaften, und daß anschließend das Gefüge aus dem an dem Rezeptorfilm anhaftenden dünnen Film einem leichten Druck ausgesetzt wird, wobei ein Klebfilm mit dem dünnen Film derart in Kontakt gebracht wird, daß sich die Motive auf dem Rezeptorfilm und die Schnittabfälle auf dem Klebfilm befinden.

50. Verfahren nach Anspruch 1, dadurch gekennzeichnet, daß der dünne Film und der Rezeptorfilm gleichzeitig abgewickelt werden, bis diese miteinander in Kontakt kommen können, daß dann ein lokaler Druck auf die beiden Filme ausgeübt wird, indem diese zwischen einem Schnittstempel und einer Grundplatte durchgeführt werden, wobei der Schnittstempel aus einem bezüglich des dünnen Filmes nicht haftenden Material ist, wobei der Schnittstempel sich auf der Seite des dünnen Filmes und die Grundplatte auf der Seite des Rezeptorfilmes befindet, wobei die Abmessung des Schnittstempels derjenigen des zu erzeugenden Motives entspricht, wobei der Schnittstempel den lokalen Druck ausübt, der so gewählt ist, daß eine starke Adhäsion zwischen dem Rezeptorfilm und den angedrückten Bereichen des dünnen Filmes erzeugt wird, während die nicht angedrückten Bereiche nur leicht durch eine leichte Berührung aneinander haften, und daß dann das Gefüge aus dem an dem Rezeptorfilm anhaftenden dünnen Film einem leichten Druck ausgesetzt wird, wobei ein Klebfilm mit dem dünnen Film derart in Kontakt gebracht wird, daß sich die Motive auf dem Rezeptorfilm und die Schnittabfälle auf dem Klebfilm befinden.

51. Verfahren nach Anspruch 1, dadurch gekennzeichnet, daß der dünne Film und der Rezeptorfilm gleichzeitig abgewickelt werden, bis diese miteinander in Kontakt kommen können, daß dann ein lokaler Druck auf die beiden Filme ausgeübt wird, indem diese zwischen einer Vorrichtung, mittels der eine Gruppe von einander benachbarten gestanzten Bereichen erzeugt werden kann, und einer Stützwalze durchgeführt werden, wobei die Vorrichtung aus einem bezüglich des dünnen Filmes nicht haftenden Material ist, wobei die Vorrichtung den lokalen Druck durch einen Kontakt mit dem dünnen Film ausübt, um das Motiv zu erzeugen, wobei die Stützwalze in Kontakt mit dem Rezeptorfilm steht, wobei der Druck so gewählt ist, daß eine starke Adhäsion zwischen dem Rezeptorfilm und den angedrückten Bereichen des dünnen Films erzeugt wird, während die nicht angedrückten Bereiche nur leicht durch eine leichte Berührung aneinander haften, und daß anschließend das Gefüge aus dem an dem Rezeptorfilm anhaftenden dünnen Film einem leichten Druck ausgesetzt wird, wobei ein Klebfilm mit dem dünnen Film derart in Kontakt gebracht wird, daß sich die Motive auf dem Rezeptorfilm und die Abschnitte auf dem Klebfilm befinden.

52. Verfahren nach Anspruch 6, 15, 16 oder 17, dadurch gekennzeichnet, daß zuvor diejenige Oberfläche des Trägerfilmes, die dazu vorgesehen ist, mit dem dünnen Film in Kontakt zu kommen, außer in den Motiven entsprechenden Bereichen mit einem Klebstoff bestrichen wird, so daß die Adhäsion der Schnittabfälle auf dem Trägerfilm verstärkt wird.

53. Verfahren nach Anspruch 1, dadurch gekennzeichnet, daß der dünne Film und der Rezeptorfilm abgewickelt werden, bis diese miteinander in Kontakt kommen können, daß dann ein lokaler erster Druck auf die beiden Filme ausgeübt wird, wobei der Druck vorzugsweise durch eine mit einer Gravur versehenen Walze, einen Schnittstempel oder eine Gruppe von gestanzten Bereichen ausgeübt wird, wobei der zweite Druck vorzugsweise geringer als der erste Druck ist, wobei die nicht angedrückten Bereiche durch eine einfache Berührung aneinander haften, wobei dann das Gefüge aus dem an dem Rezeptorfilm anhaftenden Film einem zweiten Druck ausgesetzt wird, der niedriger als der erste Druck ist, wobei ein Klebfilm mit dem dünnen Film derart in Kontakt gebracht wird, daß die Motive auf dem Rezeptorfilm verbleiben und sich die Schnittabfälle auf dem Klebfilm befinden.

54. Verfahren nach Anspruch 50, 51, 52 oder 53, dadurch gekennzeichnet, daß das zum Andrücken des Lithiums im Bereich des Motives dienende Element bezüglich Lithium klebend ist, und daß ein Träger verwendet wird, der bezüglich Lithium nicht klebend ist.

55. Verfahren nach Anspruch 48, dadurch gekennzeichnet, daß der Trägerfilm sich in Bereichen, wo kein Lithium über die Breite des Rezeptorfilmes vorhanden ist, weniger schnell bewegt oder zeitweise stillsteht.

## Claims

1. Process for assembling electrodes of a thin film of lithium metal or one of its alloys, in which said electrodes are prepared from shaped parts obtained from a thin film of lithium or one of its alloys which have previously been cut out according to predetermined geometrical shapes and sizes, said parts being then positioned on a receptor film, characterized in that said thin film and said receptor film are simultaneously unrolled until they contact one another, and said shaped parts are then cut our by applying a pressure on both films at locations where transfer is to take place, said pressure being sufficient to cause said shaped parts of said thin film to adhere to said receptor, this operation being carried out during a continuous unrolling of said two films when they are placed to come into contact with one another, and being followed by a separation of the two films, said formed shaped parts adhering to the receptor and what remains of said film being detached therefrom.

2. Process according to claim 1, characterized in that said thin film is in contact with an element whose adhesion with said thin film is less than the one which exists between said thin film and said receptor.

3. Process according to claim 1, characterized in that the element in contact with said thin film consists of a support film.

4. Process according to claim 1, characterized in that the element in contact with said thin film consists of a roller which is not adhesive with respect to said film.

5. Process according to claim 1, characterized in that the element in contact with said thin film consists of a die which is not adhesive with respect to said film.

6. Process according to claim 1, characterized in that the element in contact with said thin film consists of a device capable of producing a plurality of stamped zones adjacent one another.

7. Process according to claim 2, characterized by transferring said thin film by contacting said thin film with said receptor film while exerting a pressure on said thin film so that said thin film will be removed from said element to adhere to said receptor film.

8. Process according to claim 1, characterized in that said parts are cut out by locally blocking adhesion between said thin film and said receptor film.

9. Process according to claim 1, characterized in that said receptor film includes adhesion promoters cut out along the shape of said parts and intended to receive thin film cut out according to said shaped parts by transfer.

10. Process according to claim 2, characterized by applying sufficient pressure on the support film and the thin film in order to juxtapose them with controlled adhesion.

11. Process according to claim 10, characterized by increasing the amount of adhesion between the two films by utilizing an adhesion promoter.

12. Process according to claim 10, characterized by reducing the amount of adhesion between the two films by utilizing an inhibitor of adhesion.

13. Process according to claim 2, characterized in that the support film is made of a synthetic resin which is inert towards lithium and its alloys.

14. Process according to claim 13, characterized in that the synthetic resin is in the form of a film based on polypropylene, polyethylene or mixtures of these resins.

15. Process according to claim 7, characterized by providing the first pressure by applying a roller having embossed thereon the model of the part to be produced against the surface of the support film which is free of lithium or its alloys.

16. Process according to claim 7, characterized by providing the first pressure by applying a die whose size corresponds to that of the part to be produced against the surface of the support film which is free of lithium or its alloys.

17. Process according to claim 7, characterized by providing the pressure by applying a plurality of stamped zones adjacent one another, the size of the plurality of the zones corresponding to that of the part to be produced against the surface of the support film which is free of lithium or its alloys.

18. Process according to claim 17, characterized by providing the first pressure by moving a roller over a plate having embossed thereon at least one shape to be produced and on which the receptor film is placed, and moving said roller forward for a new cut after said shaped part has been obtained.

19. Process according to claim 3, characterized by placing a blocking film between the support film/thin film combination and the receptor film so as to prevent any contact between lithium or its alloys and the receptor film in regions of the receptor film located outside the region where the part should be transferred.

20. Process according to claim 19, characterized in that the blocking film is more adhesive towards said thin film than the support film, the blocking film is fixed onto the receptor film before depositing a part of lithium or its alloys on said receptor film, and when the part has been placed on the receptor film and the cuttings have been transferred to the blocking film, said blocking film is removed, said blocking film carrying cuttings of thin films.

21. Process according to claim 19, characterized in that the blocking film is less adhesive towards said thin film than the support film, the blocking film is fixed to the receptor film before placing the part of lithium or its alloys on said receptor film, and when the part has been placed over the receptor film and the cuttings remain on the support film, the support film is removed carrying therewith the cuttings, and finally the blocking film is removed.

22. Process according to claim 20, characterized in that the blocking film is less adhesive towards said thin film than the support film, the blocking film is fixed to the receptor film before placing a part of lithium or its alloys on said receptor film, and when the part has been placed on the receptor film and the cuttings remain on the blocking film, the blocking film and the support film are removed carrying the cuttings.

23. Process according to claim 21, characterized in that the blocking film consists of a synthetic resin or a metallic film.

24. Process according to claim 23, characterized in that the blocking film consists of a synthetic resin based on polypropylene, polyester, polysulfone, polyethylene or polyetherimide.

25. Process according to claim 1, characterized by coating the receptor film with a conductive glue at locations where the part of thin film is intended to be transferred to the receptor film, said conductive glue covering surfaces of said receptor film corresponding to said part, so as to promote adhesiveness between the thin film and the receptor film.

26. Process according to claim 1, characterized by locally treating said receptor film on surface portions corresponding to said part, so as to promote adhesiveness between the thin film and the receptor film.

27. Process according to claim 1, characterized in that the receptor film consists of a metallic or metallized film or one which adheres well on the thin film, and on which there are provided zones having a lower adhesion towards lithium to produce said part in zones of good adhesiveness.

28. Process according to claim 27, characterized in that the receptor film consists of a metallic film.

29. Process according to claim 28, characterized in that the zones of lower adhesiveness are provided on said metallic film by fixing a blocking film on the latter at said zones of low adhesiveness, said blocking film consisting of a synthetic resin based on polypropylene or polyethylene.

30. Process according to claim 1, characterized in that the receptor film is based on a synthetic resin and includes zones of low adhesiveness with lithium and zones having a stronger adhesiveness towards lithium, the latter being intended to receive said parts.

31. Process according to claim 30, characterized in that the zones having a stronger adhesiveness towards lithium are prepared by placing a blocking film including openings of the same size as said parts on said receptor film, said blocking film consisting of a metallic or metallized film or a film of polyester, polysulfone, polyethylene or polyetherimide mixtures thereof, the cuttings then being present on the blocking film and the parts, on the receptor film.

32. Process according to claim 2, characterized by introducing between the support/thin film combination and the receptor film a blocking film including openings corresponding to the shape of said parts, said blocking film being non adhesive towards lithium or its alloys, so as to enable said blocking film to remove the cuttings while leaving a part of lithium or its alloys.

33. Process according to claim 2, characterized by preparing a blocking film by disposing on a film having a good affinity for lithium or its alloys, pieces of a film which is non adhesive towards lithium or its alloys and corresponding to said parts, pressing said blocking film against said support film/ thin film combination, leaving said parts on said support film, and allowing the cuttings which are fixed on said blocking film to be removed.

34. Process according to claim 23, characterized in that the metallic film is based on stainless steel, nickel, iron, molybdenum, chromium, gold, silver or alloys thereof.

35. Process according to claim 1, characterized in that the receptor film comprises a film of a plastic which is not adhesive towards lithium or its alloys, said plastic film including a layer of metal.

36. Process according to claim 35, characterized in that said layer of metal is compatible with lithium and its alloys and is selected from the group consisting of nickel, iron, molybdenum, chromium, gold, silver, platinum or alloys thereof.

37. Process according to claim 1, characterized by disposing a blocking film including openings of the same size as said parts between said thin film and said receptor film, and pressing the combination so that said parts are transferred to said receptor film via said openings and allowing the cuttings to be removed by said blocking film.

38. Process according to claim 37, characterized by pressing said combination between rollers whose surface is non adhesive towards lithium or its alloys, the width of the rollers exceeding that of said openings provided in said blocking film.

39. Process according to claim 38, characterized in that said rollers are made of a material which is non adhesive with respect to lithium or its alloys.

40. Process according to claim 38, characterized in that said rollers are provided with a coating causing said rollers to be non adhesive with respect to lithium or its alloys.

41. Process according to claim 37, characterized in that the cuttings are removed by said blocking film through adhesion of lithium on the blocking film.

42. Process according to claim 39, characterized in that said combination which is pressed between rollers additionally comprises a protector film which is introduced between said thin film and one of the rollers.

43. Process according to claim 42, characterized in that said protector film is non adhesive with respect to lithium or its alloys.

44. Process according to claim 20, characterized by locally applying a glue on the receptor film at locations where said blocking film is placed on said receptor.

45. Process according to claim 20, characterized by applying a glue on the entire surface of said blocking film which has previously been placed on said receptor film so as to provide adhesiveness between said blocking film and said thin film.

46. Process according to claim 37, 44 or 45, characterized in that said receptor film is a metallic film or a plastic film which has been metallized locally or on its entire surface.

47. Process according to claim 18 or 19, characterized by preparing small shaped parts located side by side to constitute a larger part.

48. Process according to claim 15, characterized by separating the support film from the thin film immediately after applying said roller having embossed thereon the shaped part of the film to be produced, the thin film then adhering to the receptor film, the combination of the latter thereafter undergoing a slight pressure while contacting an adhesive film with said thin film so that the parts are then present on said receptor film and the cuttings, on said adhesive film.

49. Process according to claim 1, characterized by simultaneously unrolling said thin film and said receptor film until they contact one another, exerting a localized pressure on the two films by passing them between a first and a second roller, the first roller being contacted with the thin film and having embossed thereon, in a non adhesive material, a model of the shaped part to be produced, said model exerting said localized pressure, the second roller being in contact with the receptor film, said pressure being selected to provide a strong adhesiveness between the receptor film and the pressed regions of the thin film, while the regions not under pressure adhere only slightly between one another upon contact, thereafter treating the combination of the thin film in adhesion with the receptor film, with a slight pressure while contacting an adhesive film with said thin film so that the parts are thereafter found on said receptor film and cuttings are present on said adhesive film.

50. Process according to claim 1, characterized by simultaneously unrolling said thin film and said receptor film until they contact one another, then exerting a localized pressure on the two films by passing them between a die and a base, said die being made of a material which is non adhesive with respect to the thin film, said die being located on the side of said thin film, and said base on the side of said receptor film, the size of said die corresponding to that of the shaped part to be produced, said die exerting said localized pressure, said pressure being selected to provide a strong adhesion between the receptor film and the pressed regions of thin film, while the non pressed regions adhere only slightly between one another upon mere contact, thereafter applying a light pressure to the combination of a thin film which is in adhesion with the receptor film while contacting an adhesive film with said thin film so that the shaped parts are found on said receptor film and the cuttings, on the adhesive film.

51. Process according to claim 1, characterized by simultaneously unrolling said thin film and said receptor film until they contact one another, then exerting a localized pressure between the two films by passing them between a device capable of producing a plurality of stamped zones adjacent one another, and a support roller, said device being made of a material which is non adhesive with respect to said thin film, said device exerting said localized pressure by contact with said thin film to produce said shaped part, said support roller being in contact with said receptor film, said pressure being selected to provide a strong adhesion between the receptor film and the pressed zones of thin film, while the non pressed zones adhere only slightly between one another upon mere contact, applying a slight pressure to the combination of the thin film in adhesion with the receptor film while contacting an adhesive film with said thin film so that the shaped parts are present on said receptor film and the cuttings, on said adhesive film.

52. Process according to claim 6, 15, 16 or 17, characterized by previously applying a glue on the surface of the film support intended to contact the thin film, except in regions corresponding to said shaped parts, thereby enabling adhesion of the cuttings on said film support.

53. Process according to claim 1, characterized by unrolling said thin film and said receptor until they contact one another, then exerting a first localized pressure on the two films, said pressure being preferably applied by means of an engraved roller, a die or a plurality of stamped zones, said second pressure preferably being smaller than said first pressure, said second pressure being applied as above, while the non pressed zones adhere only slightly between one another upon mere contact, applying a light pressure to the combination of the thin film in adhesion with the receptor films while contacting an adhesive film on said thin film so that the shaped parts are present on said receptor film and the cuttings, on said adhesive film.

54. Process according to claim 50, 51, 52 or 53, characterized in that the element used to press lithium in the region of the part is adhesive with respect to lithium, and a non adhesive support is used for lithium.

55. Process according to claim 48, characterized in that the support film moves less rapidly or is momentarily stationary in zones where there is no lithium along the width of the receptor film.
